# EUROPEAN PATENT APPLICATION

(11) **EP 4 664 743 A1**
(43) Date of publication of application: **17.12.2025**
(21) Application number: 25182382.9
(22) Date of filing: 12.06.2025
(51) Int. Cl.: H02M 3/00, H02M 3/28, H02M 3/335, H02M 7/483

(54) **DC-DC CONVERTER**

(30) Priority: 13.06.2024 US 202463659726 P
(71) Applicant: Delta Electronics, Inc., Neihu, Taipei 11491 (TW)
(72) Inventor: Zhang, Chi, Morrisville, NC 27560 (US); Liu, Jian, Morrisville, NC 27560 (US); Wang, Ruxi, Morrisville, NC 27560 (US); Barbosa, Peter Mantovanelli, Morrisville, NC 27560 (US)
(74) Representative: Uexküll & Stolberg

(57) **Abstract**

A DC-DC converter (1, 1a, 1b, 1c, 1d, 1e, 1f) includes N upper switches (Sa1, Sa2, Sa3, ..., SaN), N lower switches (Sb1, Sb2, Sb3, ..., SbN), N pairs of flying capacitors (Ca1, ..., CaN, Cb1, ..., CbN) and N subcircuits (21, 22, 23, 24, ...). The N lower switches (Sb1, Sb2, Sb3, ..., SbN) are electrically connected between the N upper switches (Sa1, Sa2, Sa3, ..., SaN) and the second terminal of the voltage source (11). A n-th pair of flying capacitors (Ca1, ..., CaN, Cb1, ..., CbN) is coupled between a common node between the n-th and (n+1)-th upper switches (Sa1, Sa2, Sa3, ..., SaN) and a common node between the n-th and (n+1)-th lower switches (Sb1, Sb2, Sb3, ..., SbN). A N-th pair of flying capacitors (Ca1, ..., CaN, Cb1, ..., CbN) is coupled with the N-th upper switch (Sa1, Sa2, Sa3, ..., SaN) and the N-th lower switch (Sb1, Sb2, Sb3, ..., SbN). A first subcircuit (21) is coupled between a common node between the first upper switch (Sa1) and the first lower switch (Sb1) and a middle node of a first pair of flying capacitors (Ca1, Cb1). A i-th subcircuit (22, 23, 24, ...) is coupled between a middle node of a (i-1)-th pair of flying capacitors (Ca1, ..., CaN, Cb1, ..., CbN) and a middle node of a i-th pair of flying capacitors (Ca1, ..., CaN, Cb1, ..., CbN).

## Description

### FIELD OF THE INVENTION

This present disclosure relates to a converter, and more particularly to a DC-DC converter and a control method of the DC-DC converter.

### BACKGROUND OF THE INVENTION

The resonant converter includes a resonant-tank circuit for shaping the switch voltage and/or the current waveform to minimize switching losses and allow high-frequency operation. The resonant converter has been widely employed as an isolated DC/DC converter, due to its high efficiency, simple structure achieved by magnetic integration, soft switching on both primary and secondary switches, and capability suitable for applications with wide voltage ranges.

Recently, DC-DC resonant converters with high input voltages have gained attention in high-power applications, such as solid-state transformers. These converters can deliver more power for the same input current. However, conventional DC-DC resonant converters struggle to simultaneously meet the demands of both high input voltage and high-power applications.

Therefore, there is a need of providing a DC-DC resonant converter and a control method of the DC-DC resonant converter to obviate the drawbacks encountered from the prior arts.

### SUMMARY OF THE INVENTION

The present disclosure provides a DC-DC converter. The DC-DC converter of the present disclosure includes pairs of flying capacitors and subcircuits. The DC output voltage of the DC-DC converter can be well controlled by adjusting the switching frequency according to the connection of the pairs of flying capacitors and the corresponding subcircuits. The conventional DC-DC converter cannot meet the requirements of high input voltage and high-power applications simultaneously. The DC-DC converter of the present disclosure is suitable for high input voltage and high-power applications simultaneously.

In accordance with an aspect of the present disclosure, a DC-DC converter is provided. The DC-DC resonant converter receives a DC input voltage from a voltage source having a first terminal and a second terminal. The DC-DC converter includes N upper switches, N lower switches, N pairs of flying capacitors and N subcircuits. The N upper switches are electrically connected in series. One end of the N upper switches is electrically connected to the first terminal of the voltage source. The N lower switches are electrically connected in series. The N lower switches are electrically connected between the N upper switches and the second terminal of the voltage source. A first lower switch of the N lower switches is connected with a first upper switch of the N upper switches. A n-th pair of the N pairs of flying capacitors is coupled between a common node between the n-th and (n+1)-th upper switches and a common node between the n-th and (n+1)-th lower switches, wherein n=1, 2, ..., (N-1). A N-th pair of the N pairs of flying capacitors is coupled with the N-th upper switch and the N-th lower switch. A first subcircuit of the N subcircuits is coupled between a common node between the first upper switch and the first lower switch and a middle node of a first pair of the N pairs of flying capacitors. A i-th subcircuit of the N subcircuits is coupled between a middle node of a (i-1)-th pair of the N pairs of flying capacitors and a middle node of a i-th pair of the N pairs of flying capacitors, and i=2, ..., N. N is greater than or equal to 2.

In accordance with another aspect of the present disclosure, a DC-DC converter is provided. The DC-DC converter receives a DC input voltage from a voltage source having a first terminal and a second terminal. The DC-DC converter includes 2N upper switches, 2N lower switches, N pairs of flying capacitors and at least one subcircuit. The 2N upper switches are electrically connected in series. One end of the 2N upper switches is electrically connected to the first terminal of the voltage source. The 2N lower switches are electrically connected in series. The 2N lower switches are electrically connected between the 2N upper switches and the second terminal of the voltage source. A first lower switch of the 2N lower switches is connected with a first upper switch of the 2N upper switches. A n-th pair of the N pairs of flying capacitors is coupled between a common node between the (2n-1)-th and 2n-th upper switches and a common node between the (2n-1)-th and 2n-th lower switches, wherein n=1, 2, ..., N. The at least one subcircuit is coupled with a middle node of a corresponding one of the N pairs of flying capacitors. N is greater than or equal to 2.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1A is a schematic circuit view illustrating a DC-DC converter according to a first embodiment of the present disclosure;
FIG. 1B shows sequence diagram of operation of the switches, the current of the subcircuits, and the voltage of the flying capacitors of the DC-DC converter of FIG. 1A;
FIG. 2A is a schematic circuit view illustrating a DC-DC converter according to a second embodiment of the present disclosure;
FIG. 2B shows a sequence diagram of the operation of the switches, the current of the subcircuits and the voltage of the flying capacitors of the DC-DC converter of FIG. 2A;
FIG. 3 is a schematic circuit view illustrating a DC-DC converter according to a third embodiment of the present disclosure;
FIG. 4 is a schematic circuit view illustrating a DC-DC converter according to a fourth embodiment of the present disclosure;
FIG. 5A is a schematic circuit view illustrating a DC-DC converter according to a fifth embodiment of the present disclosure;
FIG. 5B shows a sequence diagram of the operation of the switches, the current of the subcircuits, and the voltage of the flying capacitors of the DC-DC converter of FIG. 5A;
FIG. 6 is a schematic circuit view illustrating a DC-DC converter according to a sixth embodiment of the present disclosure;
FIG. 7 is a schematic circuit view illustrating a DC-DC converter according to a seventh embodiment of the present disclosure;
FIG. 8 is a schematic circuit view illustrating a DC-DC converter according to an eighth embodiment of the present disclosure;
FIG. 9 is a schematic circuit view illustrating a DC-DC converter according to a ninth embodiment of the present disclosure;
FIG. 10 is a schematic circuit view illustrating a DC-DC converter according to a tenth embodiment of the present disclosure;
FIG. 11 is a schematic circuit view illustrating a DC-DC converter according to an eleventh embodiment of the present disclosure; and
FIG. 12 is a schematic circuit view illustrating a DC-DC converter according to a twelfth embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

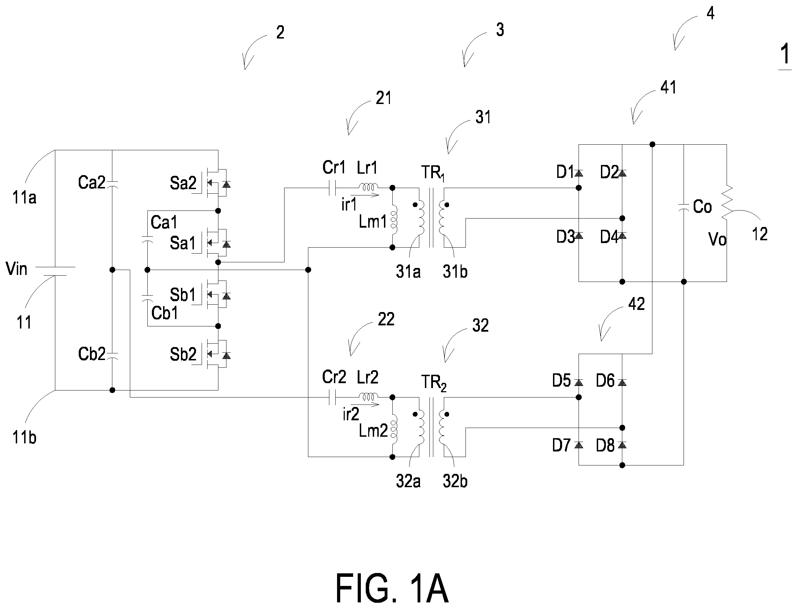

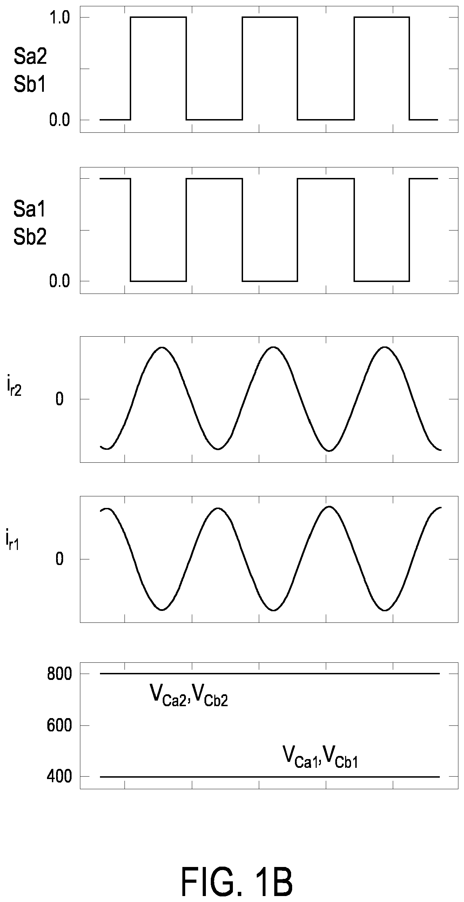

FIG. 1A is a schematic circuit view illustrating a DC-DC converter according to a first embodiment of the present disclosure. In the embodiment, the DC-DC converter is a DC-DC resonant converter. FIG. 1B shows sequence diagram of operation of the switches, the current of the subcircuits and the voltage of the flying capacitors of the DC-DC converter of FIG. 1A. As shown in FIG. 1A, the DC-DC converter 1 of this embodiment is connected between a voltage source 11 and a load 12. The DC-DC converter 1 is adapted to receive and convert a DC input voltage of the voltage source 11 to a DC output voltage to the load 12. The voltage source 11 includes a first terminal 11a and a second terminal 11b. In this embodiment, the DC input voltage is 1600V as an example. The DC-DC converter 1 includes a primary circuit 2, a transformer assembly 3, a secondary circuit assembly 4, and an output capacitor Co.

The primary circuit 2 includes two upper switches Sa1, Sa2, two lower switches Sb1, Sb2, two pairs of flying capacitors and two subcircuits 21, 22. The two upper switches Sa1, Sa2 are electrically connected in series. One end of the two upper switches Sa1, Sa2 is electrically connected to the first terminal 11a of the voltage source 11. The two lower switches Sb1, Sb2 are electrically connected in series. The two lower switches Sb1, Sb2 are electrically connected between the two upper switches Sa1, Sa2 and the second terminal 11b of the voltage source 11. The first lower switch Sb1 is connected with the first upper switch Sa1. A first pair of the two pairs of flying capacitors includes an upper flying capacitor Ca1 and a lower flying capacitor Cb1 connected in series. A first terminal of the upper flying capacitor Ca1 is connected to a top node of a first upper switch Sa1, a second terminal of the upper flying capacitor Ca1 is connected to a first terminal of the lower flying capacitor Cb1, and a second terminal of the lower flying capacitor Cb1 is connected to a bottom node of a first lower switch Sb1. Namely, the upper flying capacitor Ca1 and the lower flying capacitor Cb1 of the first pair of the two pairs of flying capacitors are coupled between a common node between the first upper switch Sa1 and the second upper switches Sa2 and a common node between the first lower switch Sb1 and the second lower switch Sb2. A second pair of the two pairs of flying capacitors includes an upper flying capacitor Ca2 and a lower flying capacitor Cb2 connected in series. A first terminal of the upper flying capacitor Ca2 is connected to a top node of a second upper switch Sa2, a second terminal of the upper flying capacitor Ca2 is connected to a first terminal of the lower flying capacitor Cb2, and a second terminal of the lower flying capacitor Cb2 is connected to a bottom node of a second lower switch Sb2. Namely, the upper flying capacitor Ca2 and the lower flying capacitor Cb2 of the second pair of the two pairs of flying capacitors are coupled with the second upper switch Sa2 and the second lower switch Sb2.

In the embodiment, the two subcircuits are resonant tanks and include a first subcircuit 21 and a second subcircuit 22. The first subcircuit 21 is coupled between a common node between the first upper switch Sa1 and the first lower switch Sb1 and a middle node of the upper flying capacitor Ca1 and the lower flying capacitor Cb1 of the first pair of the two pairs of flying capacitors. The first subcircuit 21 includes a resonant capacitor Cr1, a first resonant inductor Lr1 and a second resonant inductor Lm1. The resonant capacitor Cr1, the first resonant inductor Lr1 and the second resonant inductor Lm1 are connected in series. The second subcircuit 22 is coupled between a middle node of the upper flying capacitor Ca1 and the lower flying capacitor Cb1 of the first pair of the two pairs of flying capacitors and the middle node of the upper flying capacitor Ca2 and the lower flying capacitor Cb2 of the second pair of the two pairs of flying capacitors. The second subcircuit 22 includes a resonant capacitor Cr2, a first resonant inductor Lr2 and a second resonant inductor Lm2. The resonant capacitor Cr2, the first resonant inductor Lr2 and the second resonant inductor Lm2 are connected in series.

The transformer assembly 3 includes a first transformer 31 and a second transformer 32. The first transformer 31 includes a primary winding 31a and a secondary winding 31b. The primary winding 31a of the first transformer 31 is coupled to the second resonant inductor Lm1 of the first subcircuit 21. The second transformer 32 includes a primary winding 32a and a secondary winding 32b. The primary winding 32a of the second transformer 32 is coupled to the second resonant inductor Lm2 of the second subcircuit 22.

The secondary circuit assembly 4 includes a first secondary circuit 41 and a second secondary circuit 42. The first secondary circuit 41 includes four diodes D1, D2, D3, D4. A first diode D1 and a third diode D3 are connected in series. A common node between the first diode D1 and the third diode D3 is connected to a first terminal of the secondary winding 31b of the first transformer 31. A second diode D2 and a fourth diode D4 are connected in series. A common node between the second diode D2 and the fourth diode D4 is connected to a second terminal of the secondary winding 31b of the first transformer 31. The second secondary circuit 42 includes four diodes D5, D6, D7, D8. A fifth diode D5 and a seventh diode D7 are connected in series. A common node between the fifth diode D5 and the seventh diode D7 is connected to a first terminal of the secondary winding 32b of the second transformer 32. A sixth diode D6 and an eighth diode D8 are connected in series. A common node between the sixth diode D6 and the eighth diode D8 is connected to a second terminal of the secondary winding 32b of the second transformer 32. In this embodiment, the output terminal of the first secondary circuit 41 and the output terminal of the second secondary circuit 42 are connected in parallel for providing the DC output voltage to the load 12. More particularly, in the embodiment, the first secondary circuit 41 includes a first output terminal and a second output terminal, and the second secondary circuit 42 includes a first output terminal and a second output terminal. The first output terminal of the first secondary circuit 41 is connected to the first output terminal of the second secondary circuit 42. The second output terminal of the first secondary circuit 41 is connected to the second output terminal of the second secondary circuit 42. The output capacitor Co is connected with the load 12 in parallel. A node of the first output terminal of the first secondary circuit 41 and the first output terminal of the second secondary circuit 42 is connected to a first connection node of the output capacitor Co and the load 12. A node of the second output terminal of the first secondary circuit 41 and the second output terminal of the second secondary circuit 42 is connected to a second connection node of the output capacitor Co and the load 12. The output terminals of the first secondary circuit 41 and the output terminals of the second secondary circuit 42 are connected in parallel for providing the DC output voltage to the load 12. In some embodiments, the output terminals of the first secondary circuit 41 and the output terminals of the second secondary circuit 42 are connected in series, or independent to one another, or in any combination.

As shown in FIG. 1B, operation of the second upper switch Sa2 and the first lower switch Sb1, operation of the first upper switch Sa1 and the second lower switch Sb2, the current of the second subcircuit 22, the current of the first subcircuit 21, the voltage of the flying capacitors Ca2, Cb2 of the second pair and the voltage of the flying capacitors Ca1, Cb1 of the first pair are shown in sequence. The operation of the second upper switch Sa2 controlled by a control gate signal is the same as the operation of the first lower switch Sb1 controlled by a control gate signal. The operation of the first upper switch Sa1 controlled by a control gate signal is the same as the operation of the second lower switch Sb2 controlled by a control gate signal. The operation of the second upper switch Sa2 controlled by the control gate signal is complementary to the operation of the first upper switch Sa1 controlled by the control gate signal. According to the operation of the switches, the voltage applied to the subcircuit 21, 22 is a typical square-shaped bipolar waveform, and the current of the subcircuit 21, 22 is sinusoidal when the switching frequency is at the resonant frequency, as shown in FIG. 1B. The two subcircuits 21, 22 deliver the same power to the corresponding transformer, respectively, and the voltage of the upper flying capacitor Ca1 and the lower flying capacitor Cb1 of the first pair of the two pairs of flying capacitors is only half of the voltage of the upper flying capacitor Ca2 and the lower flying capacitor Cb2 of the second pair of the two pairs of flying capacitors. In this embodiment, the DC input voltage is 1600V, the voltage of the upper flying capacitor Ca1 and the lower flying capacitor Cb1 of the first pair of the two pairs of flying capacitors is 400V, and the voltage of the upper flying capacitor Ca2 and the lower flying capacitor Cb2 of the second pair of the two pairs of flying capacitors is 800V. It should be noted that the control gate signals are not necessarily to be the same as shown in FIG. 1B. Any control gate signal generates proper voltage excitation to the subcircuit can be implemented.

From above, the DC-DC converter 1 of the present disclosure includes pairs of the flying capacitors Ca1, Cb1, and Ca2, Cb2 and subcircuits 21, 22. The DC output voltage of the DC-DC converter 1 can be well controlled by adjusting the switching frequency according to the connection of the pairs of flying capacitors Ca1, Cb1, and Ca2, Cb2 and the corresponding subcircuits 21, 22. The conventional DC-DC converter cannot meet the requirements of high input voltage and high-power applications simultaneously. Compared with the conventional DC-DC converter, the DC-DC converter 1 of the present disclosure is suitable for high input voltage and high-power applications simultaneously.

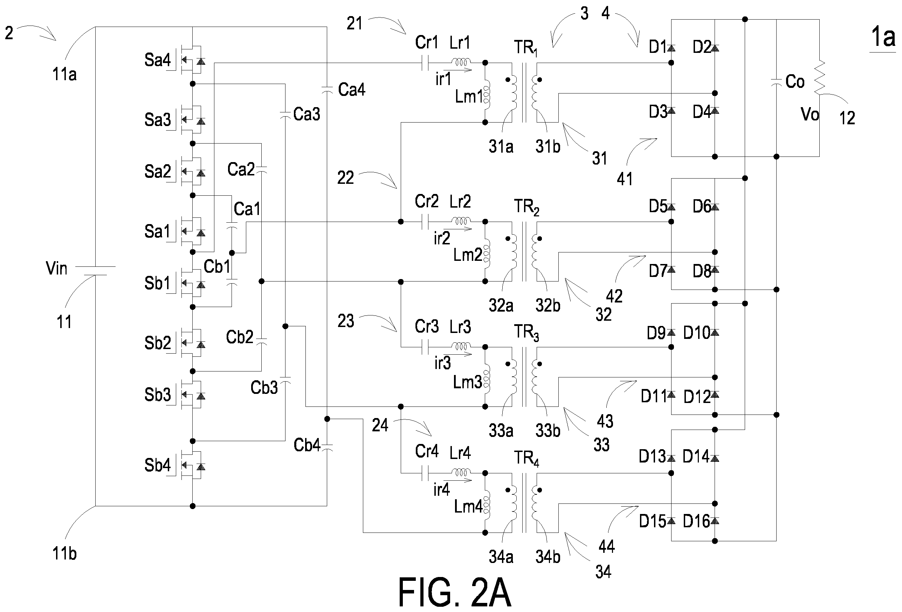

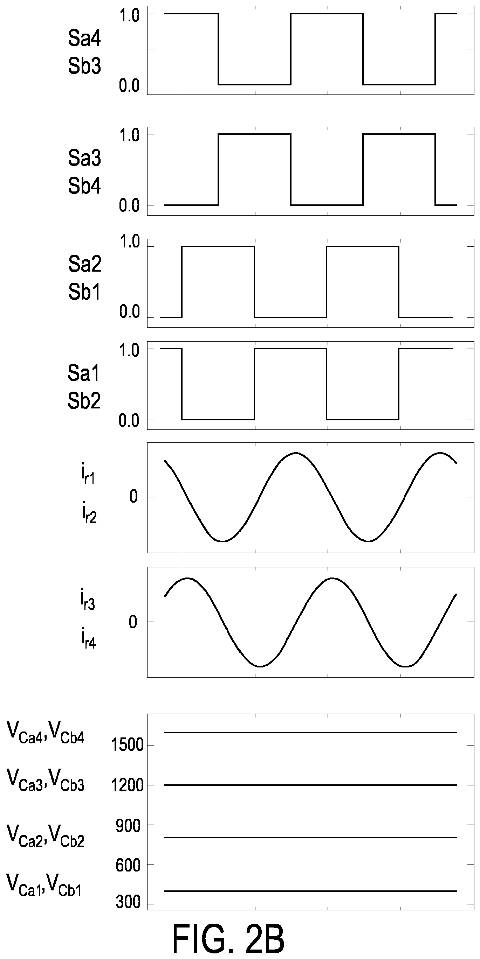

FIG. 2A is a schematic circuit view illustrating a DC-DC converter according to a second embodiment of the present disclosure. FIG. 2B shows a sequence diagram of the operation of the switches, the current of the subcircuits, and the voltage of the flying capacitors of the DC-DC converter of FIG. 2A. As shown in FIG. 2A, the DC-DC converter 1a of this embodiment is connected between a voltage source 11 and a load 12. The DC-DC converter 1a is adapted to receive and convert a DC input voltage of the voltage source 11 to a DC output voltage to the load 12. In this embodiment, the DC input voltage is 3200V. The DC-DC converter 1a includes a primary circuit 2, a transformer assembly 3, a secondary circuit assembly 4 and an output capacitor Co.

The primary circuit 2 includes four upper switches Sa1, Sa2, Sa3, Sa4, four lower switches Sb1, Sb2, Sb3, Sb4, four pairs of flying capacitors and four subcircuits 21, 22, 23, 24. The four upper switches Sa1, Sa2, Sa3, Sa4 are electrically connected in series. One end of the four upper switches Sa1, Sa2, Sa3, Sa4 is electrically connected to the first terminal 11a of the voltage source 11. The four lower switches Sb1, Sb2, Sb3, Sb4 are electrically connected in series. The four lower switches Sb1, Sb2, Sb3, Sb4 are electrically connected between the four upper switches Sa1, Sa2, Sb3, Sb4 and the second terminal 11b of the voltage source 11. A first pair of the four pairs of flying capacitors includes an upper flying capacitor Ca1 and a lower flying capacitor Cb1 connected in series. A first terminal of the upper flying capacitor Ca1 is connected to a top node of a first upper switch Sa1, a second terminal of the upper flying capacitor Ca1 is connected to a first terminal of the lower flying capacitor Cb1, and a second terminal of the lower flying capacitor Cb1 is connected to a bottom node of the first lower switch Sb1. Namely, the upper flying capacitor Ca1 and the lower flying capacitor Cb1 of the first pair of the four pairs of flying capacitors are coupled between a common node between the first upper switch Sa1 and the second upper switches Sa2 and a common node between the first lower switch Sb1 and the second lower switch Sb2. A second pair of the four pairs of flying capacitors includes an upper flying capacitors Ca2 and a lower flying capacitor Cb2 connected in series. A first terminal of the upper flying capacitor Ca2 is connected to a top node of a second upper switch Sa2, a second terminal of the upper flying capacitor Ca2 is connected to a first terminal of the lower flying capacitor Cb2, and a second terminal of the lower flying capacitor Cb2 is connected to a bottom node of a second lower switch Sb2. Namely, the upper flying capacitor Ca2 and the lower flying capacitor Cb2 of the second pair of the four pairs of flying capacitors are coupled between a common node between the second upper switch Sa2 and the third upper switches Sa3 and a common node between the second lower switch Sb2 and the third lower switch Sb3. A third pair of the four pairs of flying capacitors includes an upper flying capacitor Ca3 and a lower flying capacitor Cb3 connected in series. A first terminal of the upper flying capacitor Ca3 is connected to a top node of a third upper switch Sa3, a second terminal of the upper flying capacitor Ca3 is connected to a first terminal of the lower flying capacitor Cb3, and a second terminal of the lower flying capacitor Cb3 is connected to a bottom node of a third lower switch Sb3. Namely, the upper flying capacitor Ca3 and the lower flying capacitor Cb3 of the third pair of the four pairs of flying capacitors are coupled between a common node between the third upper switch Sa3 and the fourth upper switches Sa4 and a common node between the third lower switch Sb3 and the fourth lower switch Sb4. A fourth pair of the four pairs of flying capacitors includes an upper flying capacitor Ca4 and a lower flying capacitor Cb4 connected in series. A first terminal of the upper flying capacitor Ca4 is connected to a top node of a fourth upper switch Sa4, a second terminal of the upper flying capacitor Ca4 is connected to a first terminal of the lower flying capacitor Cb4, and a second terminal of the lower flying capacitor Cb4 is connected to a bottom node of a fourth lower switch Sb4. Namely, the upper flying capacitor Ca4 and the lower flying capacitor Cb4 of the fourth pair of the four pairs of flying capacitors are coupled with the fourth upper switch Sa4 and the fourth lower switch Sb4.

The four subcircuits include a first subcircuit 21, a second subcircuit 22, a third subcircuit 23, and a fourth subcircuit 24. The first subcircuit 21 is coupled between a common node between the first upper switch Sa1 and the first lower switch Sb1 and a middle node of the upper flying capacitor Ca1 and the lower flying capacitor Cb1 of the first pair of the four pairs of flying capacitors. The first subcircuit 21 includes a resonant capacitor Cr1, a first resonant inductor Lr1 and a second resonant inductor Lm1. The resonant capacitor Cr1, the first resonant inductor Lr1 and the second resonant inductor Lm1 are connected in series. The second subcircuit 22 is coupled between the middle node of the upper flying capacitor Ca1 and the lower flying capacitor Cb1 of the first pair of the four pairs of flying capacitors and a middle node of the upper flying capacitor Ca2 and the lower flying capacitor Cb2 of the second pair of the four pairs of flying capacitors. The second subcircuit 22 includes a resonant capacitor Cr2, a first resonant inductor Lr2 and a second resonant inductor Lm2. The resonant capacitor Cr2, the first resonant inductor Lr2 and the second resonant inductor Lm2 are connected in series. The third subcircuit 23 is coupled between the middle node of the upper flying capacitor Ca2 and the lower flying capacitor Cb2 of the second pair of the four pairs of flying capacitors and a middle node of the upper flying capacitor Ca3 and the lower flying capacitor Cb3 of the third pair of the four pairs of flying capacitors. The third subcircuit 23 includes a resonant capacitor Cr3, a first resonant inductor Lr3 and a second resonant inductor Lm3. The resonant capacitor Cr3, the first resonant inductor Lr3 and the second resonant inductor Lm3 are connected in series. The fourth subcircuit 24 is coupled between the middle node of the upper flying capacitor Ca3 and the lower flying capacitor Cb3 of the third pair of the four pairs of flying capacitors and a middle node of the upper flying capacitor Ca4 and the lower flying capacitor Cb4 of the fourth pair of the four pairs of flying capacitors. The fourth subcircuit 24 includes a resonant capacitor Cr4, a first resonant inductor Lr4 and a second resonant inductor Lm4. The resonant capacitor Cr4, the first resonant inductor Lr4 and the second resonant inductor Lm4 are connected in series.

The transformer assembly 3 includes a first transformer 31, a second transformer 32, a third transformer 33, and a fourth transformer 34. The first transformer 31 includes a primary winding 31a and a secondary winding 31b. The primary winding 31a of the first transformer 31 is coupled to the second resonant inductor Lm1 of the first subcircuit 21. The second transformer 32 includes a primary winding 32a and a secondary winding 32b. The primary winding 32a of the second transformer 32 is coupled to the second resonant inductor Lm2 of the second subcircuit 22. The third transformer 33 includes a primary winding 33a and a secondary winding 33b. The primary winding 33a of the third transformer 33 is coupled to the second resonant inductor Lm3 of the third subcircuit 23. The fourth transformer 34 includes a primary winding 34a and a secondary winding 34b. The primary winding 34a of the fourth transformer 34 is coupled to the second resonant inductor Lm4 of the fourth subcircuit 24.

The secondary circuit assembly 4 includes a first secondary circuit 41, a second secondary circuit 42, a third secondary circuit 43 and a fourth secondary circuit 44. The first secondary circuit 41 includes four diodes D1, D2, D3, D4. A first diode D1 and a third diode D3 are connected in series. A common node between the first diode D1 and the third diode D3 is connected to a first terminal of the secondary winding 31b of the first transformer 31. A second diode D2 and a fourth diode D4 are connected in series. A common node between the second diode D2 and the fourth diode D4 is connected to a second terminal of the secondary winding 31b of the first transformer 31. The second secondary circuit 42 includes four diodes D5, D6, D7, D8. A fifth diode D5 and a seventh diode D7 are connected in series. A common node between the fifth diode D5 and the seventh diode D7 is connected to a first terminal of the secondary winding 32b of the second transformer 32. A sixth diode D6 and an eighth diode D8 are connected in series. A common node between the sixth diode D6 and the eighth diode D8 is connected to a second terminal of the secondary winding 32b of the second transformer 32. The third secondary circuit 43 includes four diodes D9, D10, D11, D12. A ninth diode D9 and an eleventh diode D11 are connected in series. A common node between the ninth diode D9 and the eleventh diode D11 is connected to a first terminal of the secondary winding 33b of the third transformer 33. A tenth diode D10 and a twelfth diode D12 are connected in series. A common node between the tenth diode D10 and the twelfth diode D12 is connected to a second terminal of the secondary winding 33b of the third transformer 33. The fourth secondary circuit 44 includes four diodes D13, D14, D15, D16. A thirteenth diode D13 and a fifteenth diode D15 are connected in series. A common node between the thirteenth diode D13 and the fifteenth diode D15 is connected to a first terminal of the secondary winding 34b of the fourth transformer 34. A fourteenth diode D14 and a sixteenth diode D16 are connected in series. A common node between the fourteenth diode D14 and the sixteenth diode D16 is connected to a second terminal of the secondary winding 34b of the fourth transformer 34. In this embodiment, the output terminal of the first secondary circuit 41, the output terminal of the second secondary circuit 42, the output terminal of the third secondary circuit 43 and the output terminal of the fourth secondary circuit 44 are connected in parallel for providing the DC output voltage to the load 12. More particularly, in the embodiment, the first secondary circuit 41 includes a first output terminal and a second output terminal, the second secondary circuit 42 includes a first output terminal and a second output terminal, the third secondary circuit 43 includes a first output terminal and a second output terminal, and the fourth secondary circuit 44 includes a first output terminal and a second output terminal. The output capacitor Co is connected with the load 12 in parallel. The first output terminal of the first secondary circuit 41, the first output terminal of the second secondary circuit 42, the first output terminal of the third secondary circuit 43 and the first output terminal of the fourth secondary circuit 44 are connected to a first connection node of the output capacitor Co and the load 12. The second output terminal of the first secondary circuit 41, the second output terminal of the second secondary circuit 42, the second output terminal of the third secondary circuit 43, and the second output terminal of the fourth secondary circuit 44 are connected to a second connection node of the output capacitor Co and the load 12. The output terminals of the first secondary circuit 41, the output terminals of the second secondary circuit 42, the output terminals of the third secondary circuit 43, and the output terminals of the fourth secondary circuit 44 are connected in parallel for providing the DC output voltage to the load 12. In some embodiments, the output terminal(s) of the first secondary circuit 41, the output terminal(s) of the second secondary circuit 42, the output terminal(s) of the third secondary circuit 43, and the output terminal(s) of the fourth secondary circuit 44 are connected in series.

As shown in FIG. 2B, operation of the fourth upper switch Sa4 and the third lower switch Sb3, operation of the third upper switch Sa3 and the fourth lower switch Sb4, operation of the second upper switch Sa2 and the first lower switch Sb1, operation of the first upper switch Sa1 and the second lower switch Sb2, the current of the first subcircuit 21 and the second subcircuit 22, the current of the third subcircuit 23 and the fourth subcircuit 24, the voltage of the flying capacitors Ca4, Cb4 of the fourth pair, the voltage of the flying capacitors Ca3, Cb3 of the third pair, the voltage of the flying capacitors Ca2, Cb2 of the second pair and the voltage of the flying capacitors Ca1, Cb1 of the first pair are shown in sequence.

The operation of the fourth upper switch Sa4 controlled by a control gate signal is the same as the operation of the third lower switch Sb3 controlled by a control gate signal. The operation of the third upper switch Sa3 controlled by a control gate signal is the same as the operation of the fourth lower switch Sb4 controlled by a control gate signal. The operation of the second upper switch Sa2 controlled by a control gate signal is the same as the operation of the first lower switch Sb1 controlled by a control gate signal. The operation of the first upper switch Sa1 controlled by a control gate signal is the same as the operation of the second lower switch Sb2 controlled by a control gate signal. The operation of the fourth upper switch Sa4 controlled by the control gate signal is complementary to the operation of the third upper switch Sa3 controlled by the control gate signal. The operation of the second upper switch Sa2 controlled by the control gate signal is complementary to the operation of the first upper switch Sa1 controlled by the control gate signal. The control gate signal of the second upper switch Sa2 is delayed by 1/4 of the total switching period with respect to the control gate signal of the fourth upper switch Sa4 for reducing the output voltage ripple.

According to the operation of the switches, the voltage applied to the subcircuit 21, 22, 23, 24 is a typical square-shaped bipolar waveform, and the current of the subcircuit 21, 22, 23, 24 is sinusoid when the switching frequency is at the resonant frequency, as shown in FIG. 2B. The four subcircuits 21, 22, 23, 24 deliver the same power to the corresponding transformer, respectively, the voltage of the upper flying capacitor Ca3 and the lower flying capacitor Cb3 of the third pair of the four pairs of flying capacitors is 3/4 of the voltage of the upper flying capacitor Ca4 and the lower flying capacitor Cb4 of the fourth pair of the four pairs of flying capacitors, the voltage of the upper flying capacitor Ca2 and the lower flying capacitor Cb2 of the second pair of the four pairs of flying capacitors is half of the voltage of the upper flying capacitor Ca4 and the lower flying capacitor Cb4 of the fourth pair of the four pairs of flying capacitors, and the voltage of the upper flying capacitor Ca1 and the lower flying capacitor Cb1 of the first pair of the fourth pairs of flying capacitors is 1/4 of the voltage of the upper flying capacitor Ca4 and the lower flying capacitor Cb4 of the fourth pair of the four pairs of flying capacitors. The voltage of the upper flying capacitor Ca4 and the lower flying capacitor Cb4 of the fourth pair of the four pairs of flying capacitors is half of the DC input voltage. In this embodiment, the DC input voltage is 3200V, the voltage of the upper flying capacitor Ca4 and the lower flying capacitor Cb4 of the fourth pair of the four pairs of flying capacitors is 1600V, the voltage of the upper flying capacitor Ca3 and the lower flying capacitor Cb3 of the third pair of the four pairs of flying capacitors is 1200V, the voltage of the upper flying capacitor Ca2 and the lower flying capacitor Cb2 of the second pair of the four pairs of flying capacitors is 800V, and the voltage of the upper flying capacitor Ca1 and the lower flying capacitor Cb1 of the first pair of the fourth pairs of flying capacitors is 400V. It should be noted that the control gate signals are not necessarily to be the same as shown in FIG. 2B. Any control gate signal generates proper voltage excitation to the subcircuit can be implemented.

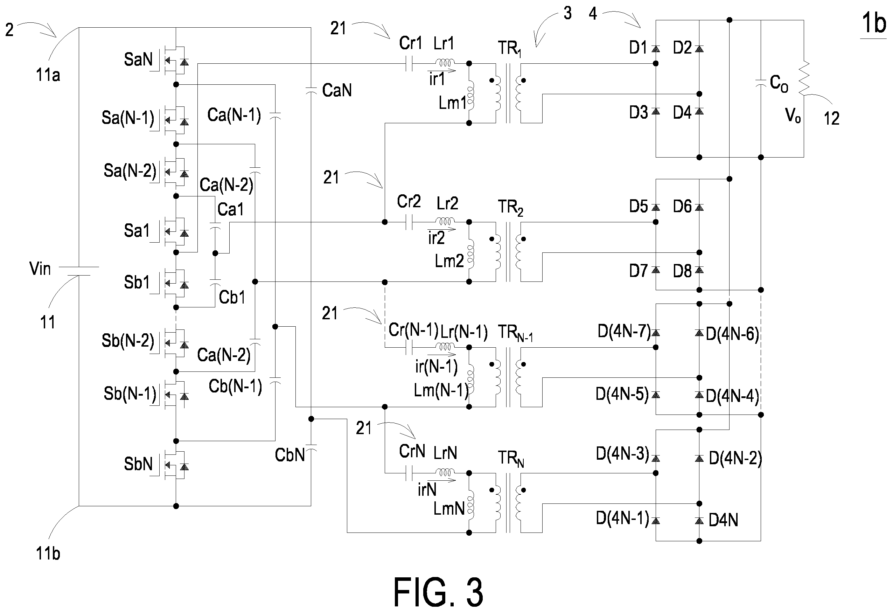

FIG. 3 is a schematic circuit view illustrating a DC-DC converter according to a third embodiment of the present disclosure. As shown in FIG. 3, the DC-DC converter 1b of this embodiment is a DC-DC resonant converter and connected between a voltage source 11 and a load 12. The DC-DC converter 1b is adapted to receive and convert a DC input voltage of the voltage source 11 to a DC output voltage to the load 12. The DC-DC converter 1b includes a primary circuit 2, a transformer assembly 3, a secondary circuit assembly 4 and an output capacitor Co. The primary circuit 2, the transformer assembly 3, the secondary circuit assembly 4 and the output capacitor Co of the DC-DC converter 1b of this embodiment are similar to the primary circuit 2, the transformer assembly 3, the secondary circuit assembly 4 and the output capacitor Co of the DC-DC converter 1a of FIG. 2A.

In this embodiment, the primary circuit 2 includes N upper switches Sa1, Sa(N-2), Sa(N-1), SaN, N lower switches Sb1, Sb(N-2), Sb(N-1), SbN, N pairs of flying capacitors and N subcircuits 21. Summarily, the N upper switches Sa1, Sa(N-2), Sa(N-1), SaN are electrically connected in series. One end of the N upper switches Sa1, Sa(N-2), Sa(N-1), SaN is electrically connected to the first terminal 11a of the voltage source 11. The N lower switches Sb1, Sb(N-2), Sb(N-1), SbN are electrically connected in series. The N lower switches Sb1, Sb(N-2), Sb(N-1), SbN are electrically connected between the N upper switches Sa1, Sa(N-2), Sa(N-1), SaN and the second terminal 11b of the voltage source 11. N is greater than or equal to 2. An n-th pair of the N pairs of flying capacitors is coupled to an n-th switch of the 2N switches and a (2N-n+1)-th switch of the 2N switches, and n=1, 2, ..., N. A n-th pair of the N pairs of flying capacitors is coupled between a common node between the n-th and (n+1)-th upper switches and a common node between the n-th and (n+1)-th lower switches, wherein n=1, 2, ..., (N-1), a N-th pair of the N pairs of flying capacitors is coupled with the N-th upper switch and the N-th lower switch. Similarly, the transformer assembly 3 includes N transformer, and the secondary circuit assembly 4 includes N secondary circuits, and the connection of each transformer and each secondary circuit are similar to the transformer and the secondary circuit of FIG.2A, and is not redundantly described hereinafter. In this embodiment, the output terminals of the N secondary circuits are connected in parallel for providing the DC output voltage to the load 12. In other embodiments, the output terminals of the N secondary circuits are independent of each other for providing at least two independent output voltages.

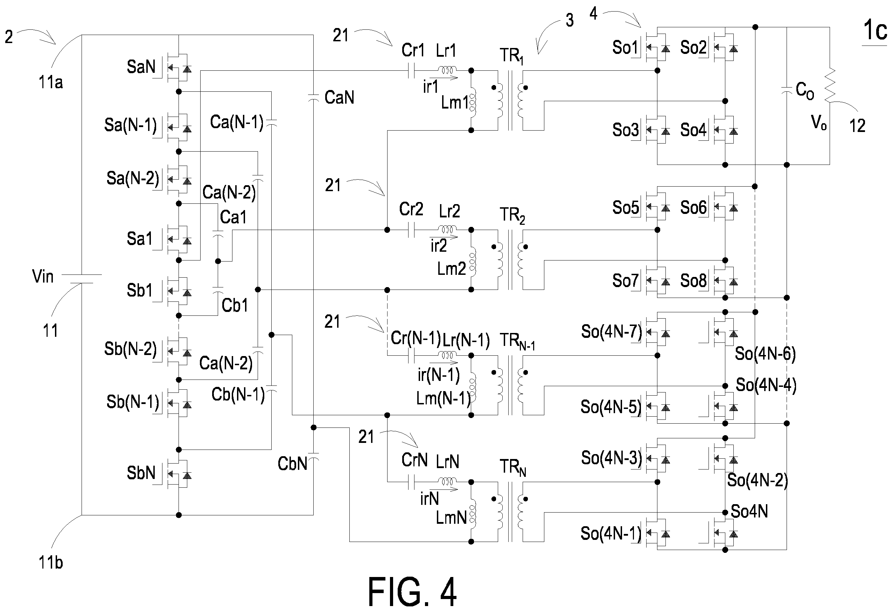

FIG. 4 is a schematic circuit view illustrating a DC-DC converter according to a fourth embodiment of the present disclosure. As shown in FIG. 4, the DC-DC converter 1c of this embodiment is similar to the DC-DC converter 1a of FIG. 3. Each secondary circuit of the secondary circuit assembly 4 of the DC-DC converter 1a of FIG. 3 includes four diodes. In this embodiment, each secondary circuit of the secondary circuit assembly 4 includes four active switches. For example, the first secondary circuit of the secondary circuit assembly 4 includes four active switches So1, So2, So3, So4. The active switches of each secondary circuit of the secondary circuit assembly 4 of this embodiment are utilized for achieving synchronous rectification and enhancing operation efficiency. In some embodiments, the active switches of each secondary circuit of the secondary circuit assembly 4 of this embodiment can also be applied for controlling phase-shift and delay time.

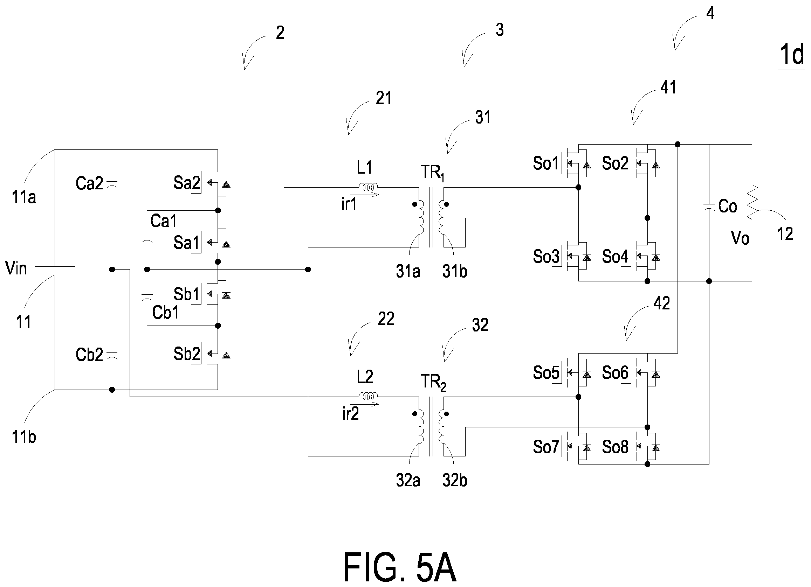

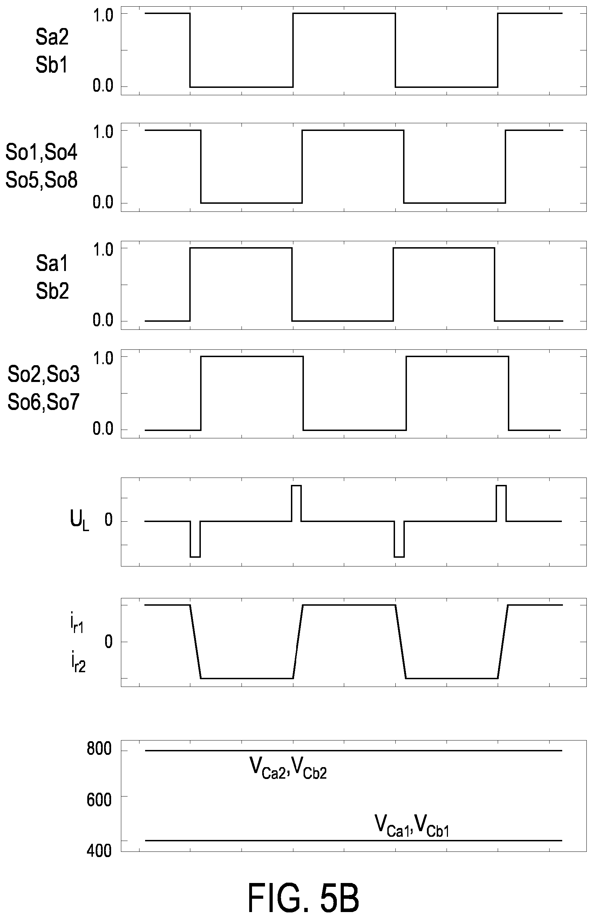

FIG. 5A is a schematic circuit view illustrating a DC-DC converter according to a fifth embodiment of the present disclosure. FIG. 5B shows a sequence diagram of the operation of the switches, the current of the subcircuits, and the voltage of the flying capacitors of the DC-DC converter of FIG. 5A. As shown in FIG. 5A, the DC-DC converter 1d of this embodiment is a dual active bridge (DAB) DC-DC converter and connected between a voltage source 11 and a load 12. The DC-DC converter 1d is adapted to receive and convert a DC input voltage of the voltage source 11 to a DC output voltage to the load 12. In this embodiment, the DC input voltage is 1600V. The DC-DC converter 1d includes a primary circuit 2, a transformer assembly 3, a secondary circuit assembly 4 and an output capacitor Co.

The primary circuit 2 includes two upper switches Sa1, Sa2, two lower switches Sb1, Sb2, two pairs of flying capacitors and two subcircuits 21, 22. The two upper switches Sa1, Sa2 are electrically connected in series. One end of the two upper switches Sa1, Sa2 is electrically connected to the first terminal 11a of the voltage source 11. The two lower switches Sb1, Sb2 are electrically connected in series. The two lower switches Sb1, Sb2 are electrically connected between the two upper switches Sa1, Sa2 and the second terminal 11b of the voltage source 11. A first pair of the two pairs of flying capacitors includes an upper flying capacitor Ca1 and a lower flying capacitor Cb1 connected in series. A first terminal of the upper flying capacitor Ca1 is connected to a top node of a first upper switch Sa1, a second terminal of the upper flying capacitor Ca1 is connected to a first terminal of the lower flying capacitor Cb1, and a second terminal of the lower flying capacitor Cb1 is connected to a bottom node of a first lower switch Sb1. Namely, the upper flying capacitor Ca1 and the lower flying capacitor Cb1 of the first pair of the two pairs of flying capacitors are coupled between a common node between the first upper switch Sa1 and the second upper switches Sa2 and a common node between the first lower switch Sb1 and the second lower switch Sb2. A second pair of the two pairs of flying capacitors includes an upper flying capacitor Ca2 and a lower flying capacitor Cb2 connected in series. A first terminal of the upper flying capacitor Ca2 is connected to a top node of a second upper switch Sa2, a second terminal of the upper flying capacitor Ca2 is connected to a first terminal of the lower flying capacitor Cb2, and a second terminal of the lower flying capacitor Cb2 is connected to a bottom node of a second lower switch Sb2. Namely, the upper flying capacitor Ca2 and the lower flying capacitor Cb2 of the second pair of the two pairs of flying capacitors are coupled with the second upper switch Sa2 and the second lower switch Sb2.

The two subcircuits include a first subcircuit 21 and a second subcircuit 22. The first subcircuit 21 is coupled between a common node between the first upper switch Sa1 and the first lower switch Sb1 and a middle node of the upper flying capacitor Ca1 and the lower flying capacitor Cb1 of the first pair of the two pairs of flying capacitors. The first subcircuit 21 includes an inductor L1. The second subcircuit 22 is coupled between the middle node of the upper flying capacitor Ca1 and the lower flying capacitor Cb1 of the first pair of the two pairs of flying capacitors and a middle node of the upper flying capacitor Ca2 and the lower flying capacitor Cb2 of the second pair of the two pairs of flying capacitors. The second subcircuit 22 includes an inductor L2.

The transformer assembly 3 includes a first transformer 31 and a second transformer 32. The first transformer 31 includes a primary winding 31a and a secondary winding 31b. The primary winding 31a of the first transformer 31 is connected between the inductor L1 of the first subcircuit 21 and the middle node between the upper flying capacitor Ca1 and the lower flying capacitor Cb1 of the first pair of the two pairs of flying capacitors. The second transformer 32 includes a primary winding 32a and a secondary winding 32b. The primary winding 32a of the second transformer 32 is connected between the inductor L2 and the middle node between the upper flying capacitor Ca1 and the lower flying capacitor Cb1 of the first pair of the two pairs of flying capacitors.

The secondary circuit assembly 4 includes a first secondary circuit 41 and a second secondary circuit 42. The first secondary circuit 41 includes four active switches So1, So2, So3, So4. A first active switch So1 and a third active switch So3 are connected in series. A common node between the first active switch So1 and the third active switch So3 is connected to a first terminal of the secondary winding 31b of the first transformer 31. A second active switch So2 and a fourth active switch So4 are connected in series. A common node between the second active switch So2 and the fourth active switch So4 is connected to a second terminal of the secondary winding 31b of the first transformer 31. The second secondary circuit 42 includes four active switches So5, So6, So7, So8. A fifth active switch So5 and a seventh active switch So7 are connected in series. A common node between the fifth active switch So5 and the seventh active switch So7 is connected to a first terminal of the secondary winding 32b of the second transformer 32. A sixth active switch So6 and an eighth active switch So8 are connected in series. A common node between the sixth active switch So6 and the eighth active switch So8 is connected to a second terminal of the secondary winding 32b of the second transformer 32. In this embodiment, the output terminal of the first secondary circuit 41 and the output terminal of the second secondary circuit 42 are connected in parallel for providing the DC output voltage to the load 12. More particularly, in the embodiment, the first secondary circuit 41 includes a first output terminal and a second output terminal, and the second secondary circuit 42 includes a first output terminal and a second output terminal. The first output terminal of the first secondary circuit 41 is connected to the first output terminal of the second secondary circuit 42. The second output terminal of the first secondary circuit 41 is connected to the second output terminal of the second secondary circuit 42. The output capacitor Co is connected with the load 12 in parallel. The first output terminal of the first secondary circuit 41 and the first output terminal of the second secondary circuit 42 are connected to a first connection node of the output capacitor Co and the load 12. The second output terminal of the first secondary circuit 41 and the second output terminal of the second secondary circuit 42 are connected to a second connection node of the output capacitor Co and the load 12. The output terminals of the first secondary circuit 41 and the output terminals of the second secondary circuit 42 are connected in parallel for providing the DC output voltage to the load 12. In some embodiments, the output terminal(s) of the first secondary circuit 41 and the output terminal(s) of the second secondary circuit 42 are connected in series, or independent to one another, or in any combination.

As shown in FIG. 5B, operation of the second upper switch Sa2 and the first lower switch Sb1, operation of the active switch So1, So4, So5, So8, operation of the first upper switch Sa1 and the second lower switch Sb2, operation of the active switch So2, So3, So6, So7, the current of the subcircuit 21, 22, the voltage of the flying capacitors Ca2, Cb2 of the second pair and the voltage of the flying capacitors Ca1, Cb1 of the first pair are shown in sequence. The operation of the second upper switch Sa2 controlled by a control gate signal is the same as the operation of the first lower switch Sb1 controlled by a control gate signal. The operation of the first upper switch Sa1 controlled by a control gate signal is the same as the operation of the second lower switch Sb2 controlled by a control gate signal. The operation of the second upper switch Sa2 controlled by the control gate signal is complementary to the operation of the first upper switch Sa1 controlled by the control gate signal. The operation of the first active switch So1 controlled by a control gate signal is the same as the operation of the fourth active switch So4 controlled by a control gate signal, same as the operation of the fifth active switch So5 controlled by a control gate signal, and same as the operation of the eighth active switch So8 controlled by a control gate signal. The operation of the second active switch So2 controlled by a control gate signal is the same as the operation of the third active switch So3 controlled by a control gate signal, same as the operation of the sixth active switch So6 controlled by a control gate signal, and same as the operation of the seventh active switch So7 controlled by a control gate signal. The operation of the fifth active switch So5 controlled by the control gate signal is complementary to the operation of the sixth active switch So6 controlled by the control gate signal. When a phase-shift is generated between the control gate signal of the second upper switch Sa2 and the control gate signal of the active switch So1, i.e., a phase-shift between the output voltage of the primary circuit 2 and the output voltage of the secondary circuit assembly 4, the voltage applied to the inductor L1 is a trapezoid shape as shown in FIF. 5B. The two subcircuits 21, 22 deliver the same power to the corresponding transformer, respectively, and the voltage of the flying capacitors Ca1, Cb1 of the first pair is only half of the voltage of the flying capacitors Ca2, Cb2 of the second pair. In this embodiment, the DC input voltage is 1600V, the voltage of the flying capacitors Ca2, Cb2 of the second pair is 800V, and the voltage of the flying capacitors Ca1, Cb1 of the first pair is 400V. It should be noted that the control gate signals are not necessarily to be the same as shown in FIG. 5B. Any control gate signal generates proper voltage excitation to the subcircuit can be implemented.

The output voltage and output power of the DC-DC converter 1d can be well controlled by adjusting the switching frequency and the phase-shift angle. In addition, the DC-DC converter 1d can also operate in the reverse direction to deliver power from the secondary circuit assembly 4 to the primary circuit 2 by changing the phase shift. In some embodiments, an internal phase-shift is introduced to the secondary circuit assembly 4 and the primary circuit 2. In some embodiments, the phase shift of each secondary circuit is adjusted with respect to the primary circuit to balance the power between two transformers.

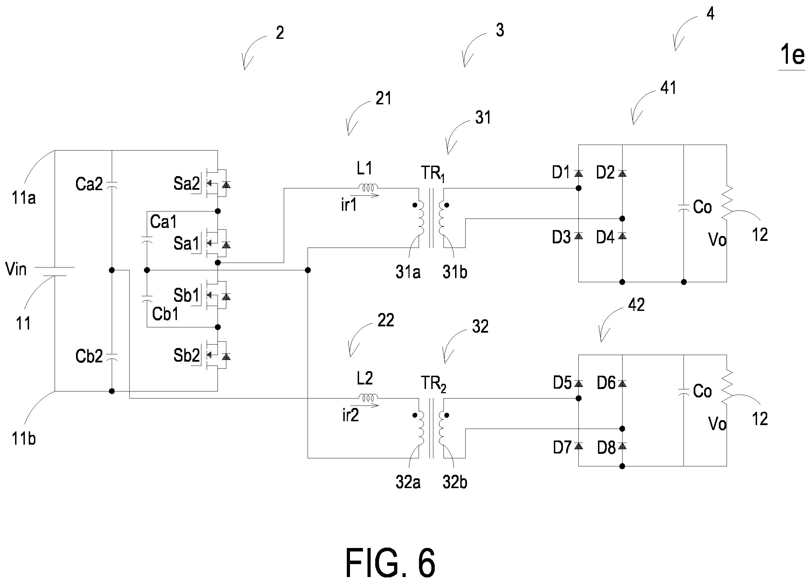

FIG. 6 is a schematic circuit view illustrating a DC-DC converter according to a sixth embodiment of the present disclosure. As shown in FIG. 6, the DC-DC converter 1e of this embodiment is similar to the DC-DC converter 1d of FIG. 5A. The DC-DC converter 1e of this embodiment is a dual active bridge (DAB) DC-DC converter. The output terminal of the first secondary circuit 41 and the output terminal of the second secondary circuit 42 of the DC-DC converter 1d of FIG. 5A are connected in parallel. Compared with the DC-DC converter 1d of FIG. 5A, the output terminal of the first secondary circuit 41 and the output terminal of the second secondary circuit 42 of the DC-DC converter 1e of this embodiment are independent of each other for providing two independent output voltages. In the embodiment, the first secondary circuit 41 is connected with the first output capacitor Co and a first load 12 in parallel for providing the DC output voltage to the first load 12. The second secondary circuit 42 is connected with the second output capacitor Co and a second load 12 in parallel for providing the DC output voltage to the second load 12.

In one embodiment, the DC-DC converter is connected between a voltage source 11 and N loads 12. The DC-DC converter includes a primary circuit 2, a transformer assembly 3, a secondary circuit assembly 4, and N output capacitor Co. Similarly, the transformer assembly 3 includes N transformer, and the secondary circuit assembly 4 includes N secondary circuits, and the connection of each transformer and each secondary circuit are similar to the transformer and the secondary circuits of FIG. 6, and is not redundantly described hereinafter. The output terminals of the N secondary circuits of the DC-DC converter of the embodiment are independent of each other for providing N independent output voltages to the N loads 12, respectively.

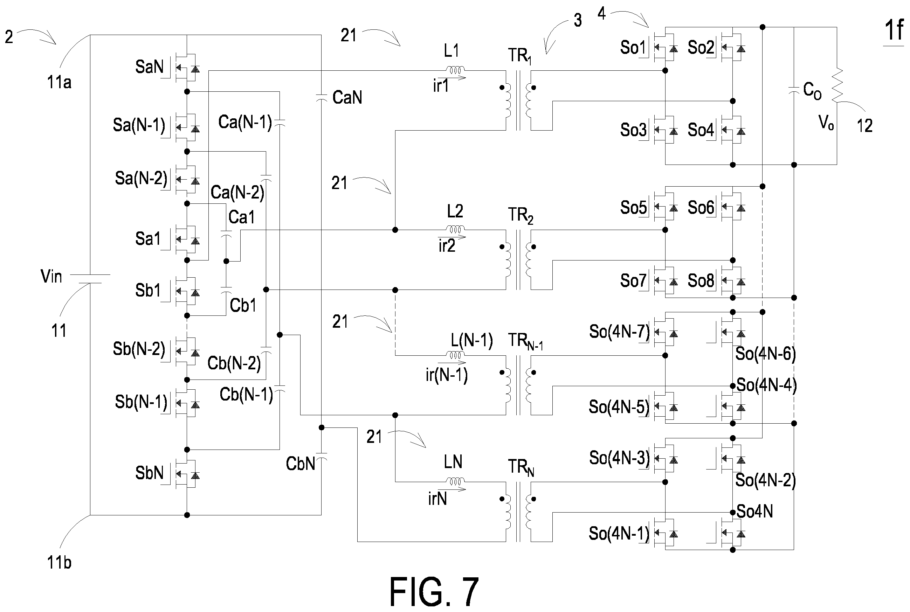

FIG. 7 is a schematic circuit view illustrating a DC-DC converter according to a seventh embodiment of the present disclosure. As shown in FIG. 7, the DC-DC converter 1f of this embodiment is similar to the DC-DC converter 1c of FIG. 4. The DC-DC converter 1f of this embodiment is a dual active bridge (DAB) DC-DC converter. Each subcircuit of the DC-DC converter 1c of FIG. 4 includes a resonant capacitor, a first resonant inductor, and a second resonant inductor. For example, the first subcircuit of the DC-DC resonant converter 1c includes a resonant capacitor Cr1, a first resonant inductor Lr1 and a second resonant inductor Lm1. Compared with the DC-DC converter 1c of FIG. 4, each subcircuit of the DC-DC converter 1f of this embodiment only includes a inductor L1, L2, ..., L(N-1), LN. For example, the first subcircuit 21 of the DC-DC converter 1f only includes a inductor Lr1.

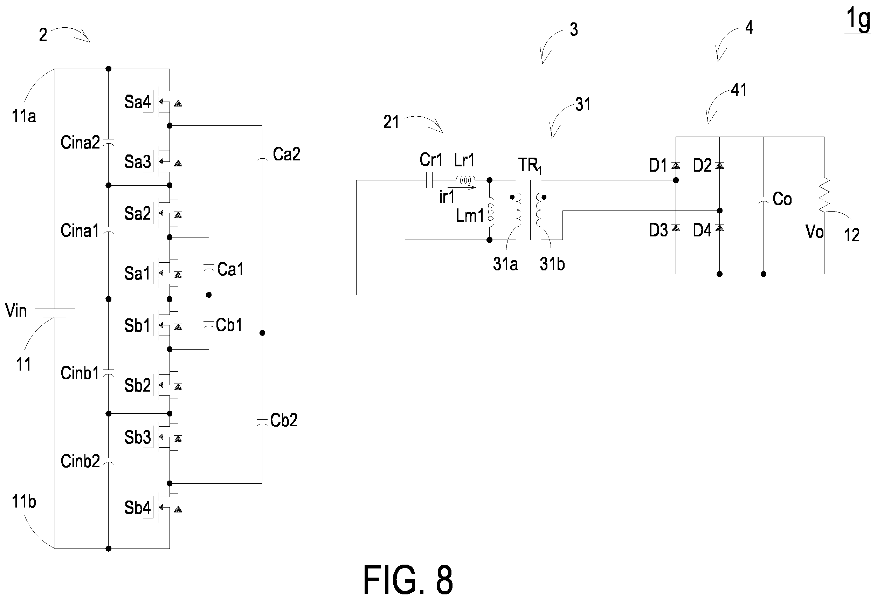

FIG. 8 is a schematic circuit view illustrating a DC-DC converter according to an eighth embodiment of the present disclosure. In the present embodiment, the DC-DC converter 1g is a DC-DC resonant converter. As shown in FIG. 8, the DC-DC converter 1g of this embodiment is connected between a voltage source 11 and a load 12. The DC-DC converter 1g is adapted to receive and convert a DC input voltage of the voltage source 11 to an DC output voltage to the load 12. The voltage source 11 includes a first terminal 11a and a second terminal 11b. The DC-DC converter 1g includes a primary circuit 2, a transformer assembly 3, a secondary circuit assembly 4 and an output capacitor Co.

The primary circuit 2 includes four upper switches Sa1, Sa2, Sa3, Sa4, four lower switches Sb1, Sb2, Sb3, Sb4, two pairs of flying capacitors, two upper input capacitors Cina1, Cina2, two lower input capacitors Cinb1, Cinb2 and one subcircuit 21. The four upper switches Sa1, Sa2, Sa3, Sa4 are electrically connected in series. One end of the four upper switches Sa1, Sa2, Sa3, Sa4 is electrically connected to the first terminal 11a of the voltage source 11. The four lower switches Sb1, Sb2, Sb3, Sb4 are electrically connected in series. The four lower switches Sb1, Sb2, Sb3, Sb4 are electrically connected between the four upper switches Sa1, Sa2, Sb3, Sb4 and the second terminal 11b of the voltage source 11. The first lower switch Sb1 is connected with the first upper switch Sa1. A first pair of the two pairs of flying capacitors includes an upper flying capacitor Ca1 and a lower flying capacitor Cb1 connected in series. A first terminal of the upper flying capacitor Ca1 is connected to a top node of a first upper switch Sa1, a second terminal of the upper flying capacitor Ca1 is connected to a first terminal of the lower flying capacitor Cb1, and a second terminal of the lower flying capacitor Cb1 is connected to a bottom node of a first lower switch Sb1. Namely, the upper flying capacitor Ca1 and the lower flying capacitor Cb1 of the first pair of the two pairs of flying capacitors is coupled between a common node between the first upper switch Sa1 and the second upper switches Sa2 and a common node between the first lower switch Sb1 and the second lower switch Sb2. A second pair of the two pairs of flying capacitors includes an upper flying capacitors Ca2 and a lower flying capacitor Cb2 connected in series. A first terminal of the upper flying capacitor Ca2 is connected to a top node of a third upper switch Sa3, a second terminal of the upper flying capacitor Ca2 is connected to a first terminal of the lower flying capacitors Cb2, and a second terminal of the lower flying capacitors Cb2 is connected to a bottom node of a third lower switch Sb3. Namely, the upper flying capacitors Ca2 and the lower flying capacitor Cb2 of the second pair of the two pairs of flying capacitors is coupled between a common node between the third upper switch Sa3 and the fourth upper switches Sa4 and a common node between the third lower switch Sb3 and the fourth lower switch Sb4. The two upper input capacitors Cina2, Cina1, the two lower input capacitors Cinb1, Cinb2 are coupled to the voltage source 11 in series in sequence. A first upper input capacitor Cina1 is coupled to the first upper switch Sa1 and the second upper switch Sa2. A second upper input capacitor Cina2 is coupled to the third upper switch Sa3 and the fourth upper switch Sa4. A first lower input capacitor Cinb1 is coupled to the first lower switch Sb1 and the second lower switch Sb2. A second lower input capacitor Cinb2 is coupled to the third lower switch Sb3 and the fourth lower switch Sb4.

The subcircuit 21 is coupled between a middle node of the upper flying capacitor Ca1 and the lower flying capacitor Cb1 of the first pair of the two pairs of flying capacitors and a middle node of the upper flying capacitor Ca2 and the lower flying capacitor Cb2 of the second pair of the two pairs of flying capacitors. The subcircuit 21 includes a resonant capacitor Cr1, a first resonant inductor Lr1 and a second resonant inductor Lm1. The resonant capacitor Cr1, the first resonant inductor Lr1 and the second resonant inductor Lm1 are connected in series.

The transformer assembly 3 includes a transformer 31. The transformer 31 includes a primary winding 31a and a secondary winding 31b. The primary winding 31a of the transformer 31 is coupled to the second resonant inductor Lm1 of the subcircuit 21.

The secondary circuit assembly 4 includes a secondary circuit 41. The secondary circuit 41 includes four diodes D1, D2, D3, D4. A first diode D1 and a third diode D3 are connected in series. A common node between the first diode D1 and the third diode D3 is connected to a first terminal of the secondary winding 31b of the transformer 31. A second diode D2 and a fourth diode D4 are connected in series. A common node between the second diode D2 and the fourth diode D4 is connected to a second terminal of the secondary winding 31b of the transformer 31. The output capacitor Co is connected with the load 12 in parallel. In this embodiment, the subcircuit 21 is a typical LLC subcircuit. In some embodiments, the subcircuit 21 is a typical series subcircuit with enhanced magnetizing inductor. In some embodiments, the four diodes D1, D2, D3, D4 of the secondary circuit 41 can be replaced by active synchronous rectifier for enhancing operation efficiency.

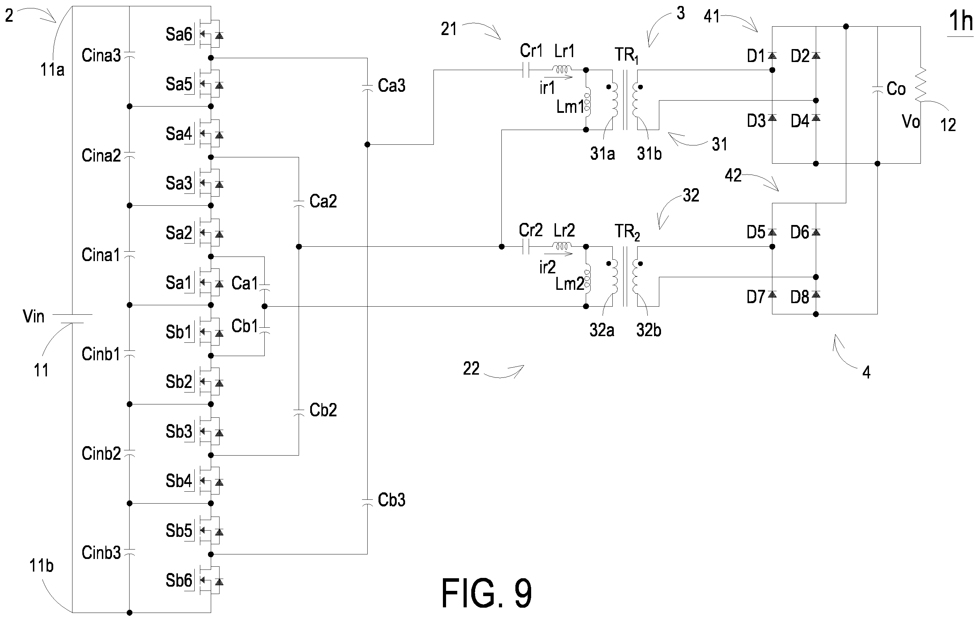

FIG. 9 is a schematic circuit view illustrating a DC-DC converter according to a ninth embodiment of the present disclosure. In the embodiment, the DC-DC converter 1h is a DC-DC resonant converter. As shown in FIG. 9, the DC-DC converter 1h of this embodiment is connected between a voltage source 11 and a load 12. The DC-DC converter 1h is adapted to receive and convert a DC input voltage of the voltage source 11 to a DC output voltage to the load 12. The voltage source 11 includes a first terminal 11a and a second terminal 11b. The DC-DC converter 1h includes a primary circuit 2, a transformer assembly 3, a secondary circuit assembly 4 and an output capacitor Co.

The primary circuit 2 includes six upper switches Sa1, Sa2, Sa3, Sa4, Sa5, Sa6, six lower switches Sb1, Sb2, Sb3, Sb4, Sb5, Sb6, three pairs of flying capacitors (Ca1, Cb1), (Ca2, Cb2), (Ca3, Cb3), three upper input capacitors Cina1, Cina2, Cina3, three lower input capacitors Cinb1, Cinb2, Cinb3 and two subcircuits 21, 22. The six upper switches Sa1, Sa2, Sa3, Sa4, Sa5, Sa6 are electrically connected in series. One end of the six upper switches Sa1, Sa2, Sa3, Sa4, Sa5, Sa6 is electrically connected to the first terminal 11a of the voltage source 11. The six lower switches Sb1, Sb2, Sb3, Sb4, Sb5, Sb6 are electrically connected in series. The six lower switches Sb1, Sb2, Sb3, Sb4, Sb5, Sb6 are electrically connected between the six upper switches Sa1, Sa2, Sb3, Sb4, Sb5, Sb6 and the second terminal 11b of the voltage source 11. The first lower switch Sb1 is connected with the first upper switch Sa1. A first pair of the three pairs of flying capacitors includes an upper flying capacitor Ca1 and a lower flying capacitor Cb1 connected in series. A first terminal of the upper flying capacitor Ca1 is connected to a top node of a first upper switch Sa1, a second terminal of the upper flying capacitor Ca1 is connected to a first terminal of the lower flying capacitor Cb1, and a second terminal of the lower flying capacitor Cb1 is connected to a bottom node of a first lower switch Sb1. Namely, the upper flying capacitor Ca1 and the lower flying capacitor Cb1 of the first pair of the three pairs of flying capacitors is coupled between a common node between the first upper switch Sa1 and the second upper switches Sa2 and a common node between the first lower switch Sb1 and the second lower switch Sb2. A second pair of the three pairs of flying capacitors includes an upper flying capacitors Ca2 and a lower flying capacitor Cb2 connected in series. A first terminal of the upper flying capacitor Ca2 is connected to a top node of a third upper switch Sa3, a second terminal of the upper flying capacitor Ca2 is connected to a first terminal of the lower flying capacitors Cb2, and a second terminal of the lower flying capacitors Cb2 is connected to a bottom node of a third lower switch Sb3. Namely, the upper flying capacitors Ca2 and the lower flying capacitor Cb2 of the second pair of the three pairs of flying capacitors is coupled between a common node between the third upper switch Sa3 and the fourth upper switches Sa4 and a common node between the third lower switch Sb3 and the fourth lower switch Sb4. A third pair of the three pairs of flying capacitors includes an upper flying capacitors Ca3 and a lower flying capacitor Cb3 connected in series. A first terminal of the upper flying capacitors Ca3 is connected to a top node of a fifth upper switch Sa5, a second terminal of the upper flying capacitors Ca3 is connected to a first terminal of the lower flying capacitors Cb3, and a second terminal of the lower flying capacitors Cb3 is connected to a bottom node of a fifth lower switch Sb5. Namely, the upper flying capacitors Ca3 and the lower flying capacitor Cb3 of the third pair of the three pairs of flying capacitors is coupled between a common node between the fifth upper switch Sa5 and the sixth upper switches Sa6 and a common node between the fifth lower switch Sb5 and the sixth lower switch Sb6.

The three upper input capacitors Cina3, Cina2, Cina1, the three lower input capacitors Cinb1, Cinb2, Cinb3 are coupled to the voltage source 11 in series in sequence. A first upper input capacitor Cina1 is coupled to the first upper switch Sa1 and the second upper switch Sa2. A second upper input capacitor Cina2 is coupled to the third upper switch Sa3 and the fourth upper switch Sa4. A third upper input capacitor Cina3 is coupled to the fifth upper switch Sa5 and the sixth upper switch Sa6. A first lower input capacitor Cinb1 is coupled to the first lower switch Sb1 and the second lower switch Sb2. A second lower input capacitor Cinb2 is coupled to the third lower switch Sb3 and the fourth lower switch Sb4. A third lower input capacitor Cinb3 is coupled to the fifth lower switch Sb5 and the sixth lower switch Sb6.

A first subcircuit 21 is coupled between a middle node of the upper flying capacitor Ca3 and the lower flying capacitor Cb3 of the third pair of the three pairs of flying capacitors and a middle node of the upper flying capacitor Ca2 and the lower flying capacitor Cb2 of the second pair of the three pairs of flying capacitors. The first subcircuit 21 includes a resonant capacitor Cr1, a first resonant inductor Lr1, and a second resonant inductor Lm1. The resonant capacitor Cr1, the first resonant inductor Lr1, and the second resonant inductor Lm1 are connected in series. A second subcircuit 22 is coupled between the middle node of the upper flying capacitor Ca2 and the lower flying capacitor Cb2 of the second pair of the three pairs of flying capacitors and a middle node of the upper flying capacitor Ca1 and the lower flying capacitor Cb1 of the first pair of the three pairs of flying capacitors. The second subcircuit 22 includes a resonant capacitor Cr2, a first resonant inductor Lr2, and a second resonant inductor Lm2. The resonant capacitor Cr2, the first resonant inductor Lr2, and the second resonant inductor Lm2 are connected in series.

The transformer assembly 3 includes a first transformer 31 and a second transformer 32. The first transformer 31 includes a primary winding 31a and a secondary winding 31b. The primary winding 31a of the first transformer 31 is coupled to the second resonant inductor Lm1 of the first subcircuit 21. The second transformer 32 includes a primary winding 32a and a secondary winding 32b. The primary winding 32a of the second transformer 32 is coupled to the second resonant inductor Lm2 of the second subcircuit 22.

The secondary circuit assembly 4 includes a first secondary circuit 41 and a second secondary circuit 42. The first secondary circuit 41 includes four diodes D1, D2, D3, D4. A first diode D1 and a third diode D3 are connected in series. A common node between the first diode D1 and the third diode D3 is connected to a first terminal of the secondary winding 31b of the first transformer 31. A second diode D2 and a fourth diode D4 are connected in series. A common node between the second diode D2 and the fourth diode D4 is connected to a second terminal of the secondary winding 31b of the first transformer 31. The second secondary circuit 42 includes four diodes D5, D6, D7, D8. A fifth diode D5 and a seventh diode D7 are connected in series. A common node between the fifth diode D5 and the seventh diode D7 is connected to a first terminal of the secondary winding 32b of the second transformer 32. A sixth diode D6 and an eighth diode D8 are connected in series. A common node between the sixth diode D6 and the eighth diode D8 is connected to a second terminal of the secondary winding 32b of the second transformer 32. The output capacitor Co is connected with the load 12 in parallel. In this embodiment, the first subcircuit 21 and the second subcircuit 22 are typical LLC subcircuits. In some embodiments, the first subcircuit 21 and the second subcircuit 22 are typical series subcircuits with enhanced magnetizing inductor. In some embodiments, the four diodes D1, D2, D3, D4 of the first secondary circuit 41 and the four diodes D5, D6, D7, D8 of the second secondary circuit 42 can be replaced by active synchronous rectifier for enhancing operation efficiency.

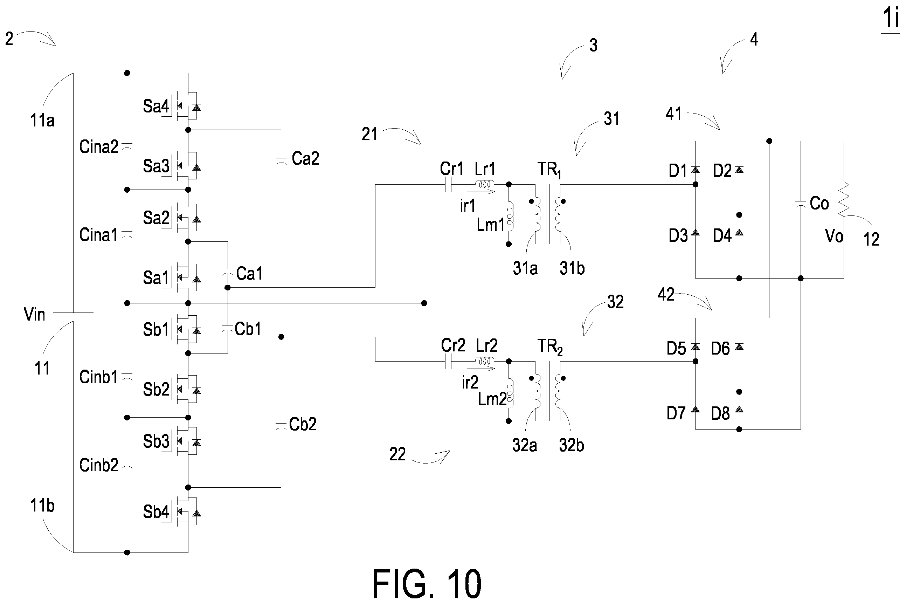

FIG. 10 is a schematic circuit view illustrating a DC-DC converter according to a tenth embodiment of the present disclosure. In the embodiment, the DC-DC converter 1i is a DC-DC resonant converter. As shown in FIG. 10, the DC-DC converter 1i of this embodiment is connected between a voltage source 11 and a load 12. The DC-DC converter 1i is adapted to receive and convert a DC input voltage of the voltage source 11 to a DC output voltage to the load 12. The voltage source 11 includes a first terminal 11a and a second terminal 11b. The DC-DC converter 1i includes a primary circuit 2, a transformer assembly 3, a secondary circuit assembly 4 and an output capacitor Co.

The primary circuit 2 includes four upper switches Sa1, Sa2, Sa3, Sa4, four lower switches Sb1, Sb2, Sb3, Sb4, two pairs of flying capacitors, two upper input capacitors Cina1, Cina2, two lower input capacitors Cinb1, Cinb2 and one subcircuit 21. The four upper switches Sa1, Sa2, Sa3, Sa4 are electrically connected in series. One end of the four upper switches Sa1, Sa2, Sa3, Sa4 is electrically connected to the first terminal 11a of the voltage source 11. The four lower switches Sb1, Sb2, Sb3, Sb4 are electrically connected in series. The four lower switches Sb1, Sb2, Sb3, Sb4 are electrically connected between the four upper switches Sa1, Sa2, Sb3, Sb4 and the second terminal 11b of the voltage source 11. The first lower switch Sb1 is connected with the first upper switch Sa1. A first pair of the two pairs of flying capacitors includes an upper flying capacitor Ca1 and a lower flying capacitor Cb1 connected in series. A first terminal of the upper flying capacitor Ca1 is connected to a top node of a first upper switch Sa1, a second terminal of the upper flying capacitor Ca1 is connected to a first terminal of the lower flying capacitor Cb1, and a second terminal of the lower flying capacitor Cb1 is connected to a bottom node of a first lower switch Sb1. Namely, the upper flying capacitor Ca1 and the lower flying capacitor Cb1 of the first pair of the two pairs of flying capacitors is coupled between a common node between the first upper switch Sa1 and the second upper switches Sa2 and a common node between the first lower switch Sb1 and the second lower switch Sb2. A second pair of the two pairs of flying capacitors includes an upper flying capacitors Ca2 and a lower flying capacitor Cb2 connected in series. A first terminal of the upper flying capacitor Ca2 is connected to a top node of a third upper switch Sa3, a second terminal of the upper flying capacitor Ca2 is connected to a first terminal of the lower flying capacitors Cb2, and a second terminal of the lower flying capacitors Cb2 is connected to a bottom node of a third lower switch Sb3. Namely, the upper flying capacitors Ca2 and the lower flying capacitor Cb2 of the second pair of the two pairs of flying capacitors is coupled between a common node between the third upper switch Sa3 and the fourth upper switches Sa4 and a common node between the third lower switch Sb3 and the fourth lower switch Sb4. The two upper input capacitors Cina2, Cina1, the two lower input capacitors Cinb1, Cinb2 are coupled to the voltage source 11 in series in sequence. A first upper input capacitor Cina1 is coupled to the first upper switch Sa1 and the second upper switch Sa2. A second upper input capacitor Cina2 is coupled to the third upper switch Sa3 and the fourth upper switch Sa4. A first lower input capacitor Cinb1 is coupled to the first lower switch Sb1 and the second lower switch Sb2. A second lower input capacitor Cinb2 is coupled to the third lower switch Sb3 and the fourth lower switch Sb4.

A first subcircuit 21 is coupled between a common node between the first upper switch Sa1 and the second upper switches Sa2 and a middle node of the upper flying capacitor Ca1 and the lower flying capacitor Cb1 of the first pair of the two pairs of flying capacitors. The first subcircuit 21 includes a resonant capacitor Cr1, a first resonant inductor Lr1, and a second resonant inductor Lm1. The resonant capacitor Cr1, the first resonant inductor Lr1, and the second resonant inductor Lm1 are connected in series. A second subcircuit 22 is coupled between the common node between the first upper switch Sa1 and the second upper switches Sa2 and a middle node of the upper flying capacitor Ca2 and the lower flying capacitor Cb2 of the second pair of the two pairs of flying capacitors. The second subcircuit 22 includes a resonant capacitor Cr2, a first resonant inductor Lr2, and a second resonant inductor Lm2. The resonant capacitor Cr2, the first resonant inductor Lr2, and the second resonant inductor Lm2 are connected in series.

The transformer assembly 3 includes a first transformer 31 and a second transformer 32. The first transformer 31 includes a primary winding 31a and a secondary winding 31b. The primary winding 31a of the first transformer 31 is coupled to the second resonant inductor Lm1 of the first subcircuit 21. The second transformer 32 includes a primary winding 32a and a secondary winding 32b. The primary winding 32a of the second transformer 32 is coupled to the second resonant inductor Lm2 of the second subcircuit 22.

The secondary circuit assembly 4 includes a first secondary circuit 41 and a second secondary circuit 42. The first secondary circuit 41 includes four diodes D1, D2, D3, D4. A first diode D1 and a third diode D3 are connected in series. A common node between the first diode D1 and the third diode D3 is connected to a first terminal of the secondary winding 31b of the first transformer 31. A second diode D2 and a fourth diode D4 are connected in series. A common node between the second diode D2 and the fourth diode D4 is connected to a second terminal of the secondary winding 31b of the first transformer 31. The second secondary circuit 42 includes four diodes D5, D6, D7, D8. A fifth diode D5 and a seventh diode D7 are connected in series. A common node between the fifth diode D5 and the seventh diode D7 is connected to a first terminal of the secondary winding 32b of the second transformer 32. A sixth diode D6 and an eighth diode D8 are connected in series. A common node between the sixth diode D6 and the eighth diode D8 is connected to a second terminal of the secondary winding 32b of the second transformer 32. The output capacitor Co is connected with the load 12 in parallel. In this embodiment, the first subcircuit 21 and the second subcircuit 22 are typical LLC subcircuits. In some embodiments, the first subcircuit 21 and the second subcircuit 22 are typical series subcircuits with enhanced magnetizing inductor. In some embodiments, the four diodes D1, D2, D3, D4 of the first secondary circuit 41 and the four diodes D5, D6, D7, D8 of the second secondary circuit 42 can be replaced by active synchronous rectifier for enhancing operation efficiency.

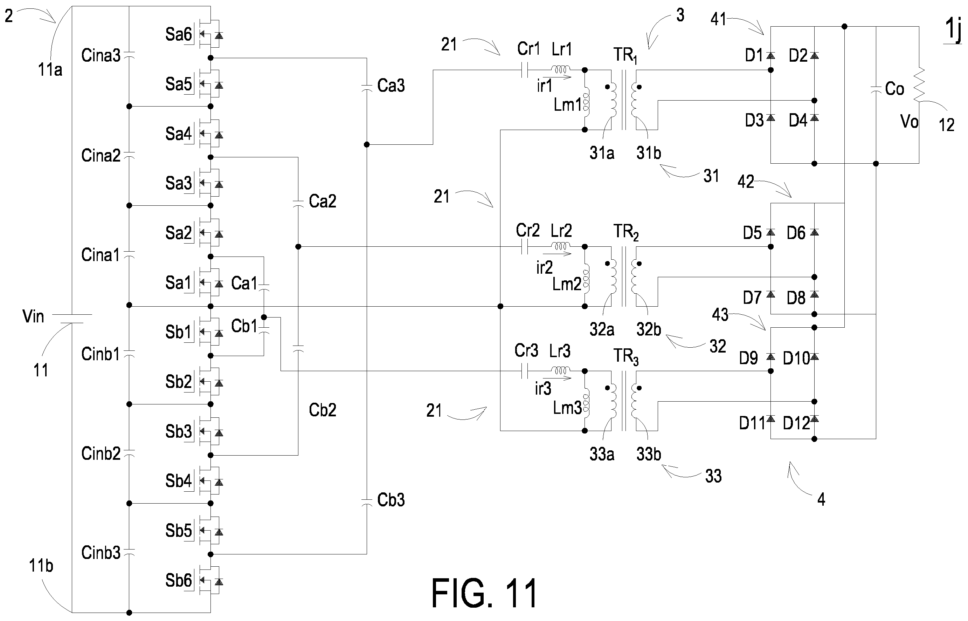

FIG. 11 is a schematic circuit view illustrating a DC-DC converter according to an eleventh embodiment of the present disclosure. In the embodiment, the DC-DC converter 1j is a DC-DC resonant converter. As shown in FIG. 11, the DC-DC converter 1j of this embodiment is connected between a voltage source 11 and a load 12. The DC-DC converter 1j is adapted to receive and convert a DC input voltage of the voltage source 11 to an DC output voltage to the load 12. The voltage source 11 includes a first terminal 11a and a second terminal 11b. The DC-DC converter 1j includes a primary circuit 2, a transformer assembly 3, a secondary circuit assembly 4 and an output capacitor Co.

The primary circuit 2 includes six upper switches Sa1, Sa2, Sa3, Sa4, Sa5, Sa6, six lower switches Sb1, Sb2, Sb3, Sb4, three pairs of flying capacitors, three upper input capacitors Cina1, Cina2, Cina3, three lower input capacitors Cinb1, Cinb2, Cinb3, and one subcircuit 21. The six upper switches Sa1, Sa2, Sa3, Sa4, Sa5, Sa6 are electrically connected in series. One end of the six upper switches Sa1, Sa2, Sa3, Sa4, Sa5, Sa6 is electrically connected to the first terminal 11a of the voltage source 11. The six lower switches Sb1, Sb2, Sb3, Sb4, Sb5, Sb6 are electrically connected in series. The six lower switches Sb1, Sb2, Sb3, Sb4, Sb5, Sb6 are electrically connected between the six upper switches Sa1, Sa2, Sb3, Sb4, Sb5, Sb6 and the second terminal 11b of the voltage source 11. The first lower switch Sb1 is connected with the first upper switch Sa1. A first pair of the three pairs of flying capacitors includes an upper flying capacitor Ca1 and a lower flying capacitor Cb1 connected in series. A first terminal of the upper flying capacitor Ca1 is connected to a top node of a first upper switch Sa1, a second terminal of the upper flying capacitor Ca1 is connected to a first terminal of the lower flying capacitor Cb1, and a second terminal of the lower flying capacitor Cb1 is connected to a bottom node of a first lower switch Sb1. Namely, the upper flying capacitor Ca1 and the lower flying capacitor Cb1 of the first pair of the three pairs of flying capacitors is coupled between a common node between the first upper switch Sa1 and the second upper switches Sa2 and a common node between the first lower switch Sb1 and the second lower switch Sb2. A second pair of the three pairs of flying capacitors includes an upper flying capacitors Ca2 and a lower flying capacitor Cb2 connected in series. A first terminal of the upper flying capacitors Ca2 is connected to a top node of a third upper switch Sa3, a second terminal of the upper flying capacitors Ca2 is connected to a first terminal of the lower flying capacitors Cb2, and a second terminal of the lower flying capacitor Cb2 is connected to a bottom node of a third lower switch Sb3. Namely, the upper flying capacitor Ca2 and the lower flying capacitor Cb2 of the second pair of the three pairs of flying capacitors is coupled between a common node between the third upper switch Sa3 and the fourth upper switches Sa4 and a common node between the third lower switch Sb3 and the fourth lower switch Sb4. A third pair of the three pairs of flying capacitors includes an upper flying capacitors Ca3 and a lower flying capacitor Cb3 connected in series. A first terminal of the upper flying capacitors Ca3 is connected to a top node of a fifth upper switch Sa5, a second terminal of the upper flying capacitors Ca3 is connected to a first terminal of the lower flying capacitors Cb3, and a second terminal of the lower flying capacitors Cb3 is connected to a bottom node of a fifth lower switch Sb5. Namely, the upper flying capacitors Ca3 and the lower flying capacitor Cb3 of the third pair of the three pairs of flying capacitors is coupled between a common node between the fifth upper switch Sa5 and the sixth upper switches Sa6 and a common node between the fifth lower switch Sb5 and the sixth lower switch Sb6.

The three upper input capacitors Cina3, Cina2, Cina1, the three lower input capacitors Cinb1, Cinb2, Cinb3 are coupled to the voltage source 11 in series in sequence. A first upper input capacitor Cina1 is coupled to the first upper switch Sa1 and the second upper switch Sa2. A second upper input capacitor Cina2 is couple to the third upper switch Sa3 and the fourth upper switch Sa4. A third upper input capacitor Cina3 is coupled to the fifth upper switch Sa5 and the sixth upper switch Sa6. A first lower input capacitor Cinb1 is coupled to the first lower switch Sb1 and the second lower switch Sb2. A second lower input capacitor Cinb2 is coupled to the third lower switch Sb3 and the fourth lower switch Sb4. A third lower input capacitor Cinb3 is coupled to the fifth lower switch Sb5 and the sixth lower switch Sb6.

A first subcircuit 21 is coupled between a common node between the first upper switch Sa1 and the second upper switches Sa2 and a middle node of the upper flying capacitor Ca3 and the lower flying capacitor Cb3 of the third pair of the three pairs of flying capacitors. The first subcircuit 21 includes a resonant capacitor Cr1, a first resonant inductor Lr1, and a second resonant inductor Lm1. The resonant capacitor Cr1, the first resonant inductor Lr1, and the second resonant inductor Lm1 are connected in series. A second subcircuit 22 is coupled between the common node between the first upper switch Sa1 and the second upper switches Sa2 and a middle node of the upper flying capacitor Ca2 and the lower flying capacitor Cb2 of the second pair of the three pairs of flying capacitors. The second subcircuit 22 includes a resonant capacitor Cr2, a first resonant inductor Lr2, and a second resonant inductor Lm2. The resonant capacitor Cr2, the first resonant inductor Lr2 and the second resonant inductor Lm2 are connected in series. A third subcircuit 23 is coupled between the common node between the first upper switch Sa1 and the second upper switches Sa2 and a middle node of the upper flying capacitor Ca1 and the lower flying capacitor Cb1 of the first pair of the three pairs of flying capacitors. The third subcircuit 23 includes a resonant capacitor Cr3, a first resonant inductor Lr3, and a second resonant inductor Lm3. The resonant capacitor Cr3, the first resonant inductor Lr3, and the second resonant inductor Lm3 are connected in series.

The transformer assembly 3 includes a first transformer 31, a second transformer 32 and a third transformer 33. The first transformer 31 includes a primary winding 31a and a secondary winding 31b. The primary winding 31a of the first transformer 31 is coupled to the second resonant inductor Lm1 of the first subcircuit 21. The second transformer 32 includes a primary winding 32a and a secondary winding 32b. The primary winding 32a of the second transformer 32 is coupled to the second resonant inductor Lm2 of the second subcircuit 22. The third transformer 33 includes a primary winding 33a and a secondary winding 33b. The primary winding 33a of the third transformer 33 is coupled to the second resonant inductor Lm3 of the third subcircuit 23.

The secondary circuit assembly 4 includes a first secondary circuit 41, a second secondary circuit 42 and a third secondary circuit 43. The first secondary circuit 41 includes four diodes D1, D2, D3, D4. A first diode D1 and a third diode D3 are connected in series. A common node between the first diode D1 and the third diode D3 is connected to a first terminal of the secondary winding 31b of the first transformer 31. A second diode D2 and a fourth diode D4 are connected in series. A common node between the second diode D2 and the fourth diode D4 is connected to a second terminal of the secondary winding 31b of the first transformer 31. The second secondary circuit 42 includes four diodes D5, D6, D7, D8. A fifth diode D5 and a seventh diode D7 are connected in series. A common node between the fifth diode D5 and the seventh diode D7 is connected to a first terminal of the secondary winding 32b of the second transformer 32. A sixth diode D6 and an eighth diode D8 are connected in series. A common node between the sixth diode D6 and the eighth diode D8 is connected to a second terminal of the secondary winding 32b of the second transformer 32. The third secondary circuit 43 includes four diodes D9, D10, D11, D12. A ninth diode D9 and an eleventh diode D11 are connected in series. A common node between the ninth diode D9 and the eleventh diode D11 is connected to a first terminal of the secondary winding 33b of the third transformer 33. A tenth diode D10 and a twelfth diode D12 are connected in series. A common node between the tenth diode D10 and the twelfth diode D12 is connected to a second terminal of the secondary winding 33b of the third transformer 33. The output capacitor Co is connected with the load 12 in parallel. In this embodiment, the first subcircuit 21, the second first subcircuit 22 and the third subcircuit 23 are typical LLC subcircuits. In some embodiments, the first subcircuit 21, the second first subcircuit 22 and the third subcircuit 23 are typical series subcircuits with enhanced magnetizing inductor. In some embodiments, the four diodes D1, D2, D3, D4 of the first secondary circuit 41, the four diodes D5, D6, D7, D8 of the second secondary circuit 42, and the four diodes D9, D10, D11, D12 of the third secondary circuit 43 can be replaced by active synchronous rectifier for enhancing operation efficiency.

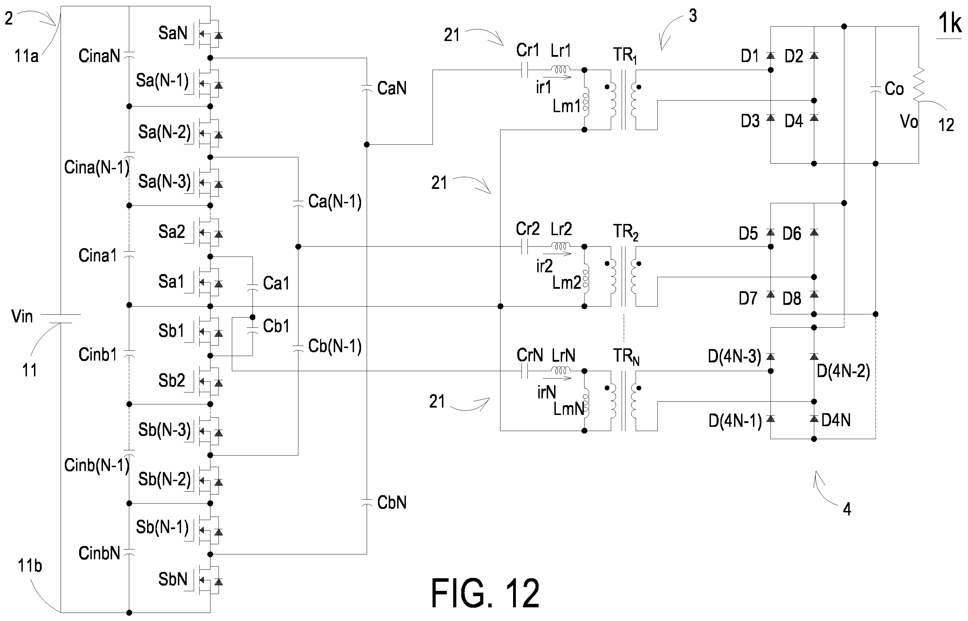

FIG. 12 is a schematic circuit view illustrating a DC-DC converter according to a twelfth embodiment of the present disclosure. In the embodiment, the DC-DC converter 1k is a DC-DC resonant converter. As shown in FIG. 12, the DC-DC converter 1k of this embodiment is connected between a voltage source 11 and a load 12. The DC-DC converter 1k is adapted to receive and convert a DC input voltage of the voltage source 11 to a DC output voltage to the load 12. The voltage source 11 includes a first terminal 11a and a second terminal 11b. The DC-DC converter 1k includes a primary circuit 2, a transformer assembly 3, a secondary circuit assembly 4 and an output capacitor Co. The primary circuit 2, the transformer assembly 3, the secondary circuit assembly 4 and the output capacitor Co of the DC-DC converter 1k of this embodiment are similar to the primary circuit 2, the transformer assembly 3, the secondary circuit assembly 4 and the output capacitor Co of the DC-DC converter 1j of FIG. 11.

In this embodiment, the primary circuit 2 includes 2N upper switches Sa1, Sa2..., Sa(N-1), SaN, 2N lower switches Sb1, Sb2..., Sb(N-1), SbN, N pairs of flying capacitors and N subcircuits 21. Summarily, the 2N upper switches Sa1, Sa2..., Sa(N-1), SaN are electrically connected in series. One end of the 2N upper switches Sa1, Sa2..., Sa(N-1), SaN is electrically connected to the first terminal 11a of the voltage source 11. The 2N lower switches Sb1, Sb2..., Sb(N-1), SbN are electrically connected in series. The 2N lower switches Sb1, Sb2..., Sb(N-1), SbN is electrically connected between the 2N upper switches Sa1, Sa2..., Sa(N-1), SaN and the second terminal 11b of the voltage source11. N is greater than or equal to 2. A n-th pair of the N pairs of flying capacitors is coupled between a common node between the (2n-1)-th and 2n-th upper switches and a common node between the (2n-1)-th and 2n-th lower switches, and n=1, 2, ..., N.

A first subcircuit of the N subcircuits is coupled between a common node between the first upper switch Sa1 and the second upper switches Sa2and a middle node of a N-th pair of the N pairs of flying capacitors. A second subcircuit of the N subcircuits is coupled between the common node between the first upper switch Sa1 and the second upper switches Sa2 and a middle node of a (N-1)-th pair of the N pairs of flying capacitors. A Nth subcircuit of the N subcircuits is coupled between the common node between the first upper switch Sa1 and the second upper switches Sa2 and a middle node of a first pair of the N pairs of flying capacitors. Similarly, the transformer assembly 3 includes N transformer, and the secondary circuit assembly 4 includes N secondary circuits, and the connection of each transformer and each secondary circuit are similar to the transformer and the secondary circuit of FIG.11, and is not redundantly described hereinafter.

From the above description, the DC-DC converter of the present disclosure includes pairs of flying capacitors and subcircuits. The DC output voltage of the DC-DC converter can be well controlled by adjusting the switching frequency according to the connection of the pairs of flying capacitors and the corresponding subcircuits. The conventional DC-DC converter cannot meet the requirements of high input voltage and high-power applications simultaneously. The DC-DC converter of the present disclosure is suitable for high input voltage and high-power applications simultaneously.

## Claims

1. A DC-DC converter (1, 1a, 1b, 1c, 1d, 1e, 1f), receiving a DC input voltage (Vin) from a voltage source (11) having a first terminal (11a) and a second terminal (11b), and the DC-DC converter (1, 1a, 1b, 1c, 1d, 1e, 1f) **characterized by** comprising:
N upper switches (Sa1, Sa2, Sa3, ..., SaN) electrically connected in series, wherein one end of the N upper switches (Sa1, Sa2, Sa3, ..., SaN) is electrically connected to the first terminal (11a) of the voltage source (11);
N lower switches (Sb1, Sb2, Sb3, ..., SbN) electrically connected in series, wherein the N lower switches (Sb1, Sb2, Sb3, ..., SbN) are electrically connected between the N upper switches (Sa1, Sa2, Sa3, ..., SaN) and the second terminal (11b) of the voltage source (11), wherein a first lower switch (Sb1) of the N lower switches (Sb1, Sb2, Sb3, ..., SbN) is connected with a first upper switch (Sa1) of the N upper switches (Sa1, Sa2, Sa3, ..., SaN);
N pairs of flying capacitors (Ca1, ..., CaN, Cb1, ..., CbN), wherein a n-th pair of the N pairs of flying capacitors (Ca1, ..., CaN, Cb1, ..., CbN) is coupled between a common node between the n-th and (n+1)-th upper switches (Sa1, Sa2, Sa3, ..., SaN) and a common node between the n-th and (n+1)-th lower switches (Sb1, Sb2, Sb3, ..., SbN), wherein n=1, 2, ..., (N-1), a N-th pair of the N pairs of flying capacitors (Ca1, ..., CaN, Cb1, ..., CbN) is coupled with the N-th upper switch (Sa1, Sa2, Sa3, ..., SaN) and the N-th lower switch (Sb1, Sb2, Sb3, ..., SbN); and
N subcircuits (21, 22, 23, 24, ...), wherein a first subcircuit (21) of the N subcircuits (21, 22, 23, 24, ...) is coupled between a common node between the first upper switch (Sa1) and the first lower switch (Sb1) and a middle node of a first pair of the N pairs of flying capacitors (Ca1, Cb1), and a i-th subcircuit (22, 23, 24, ...) of the N subcircuits (21, 22, 23, 24, ...) is coupled between a middle node of a (i-1)-th pair of the N pairs of flying capacitors (Ca1, ..., CaN, Cb1, ..., CbN) and a middle node of a i-th pair of the N pairs of flying capacitors (Ca1, ..., CaN, Cb1, ..., CbN), and i=2, ..., N;
wherein N is greater than or equal to 2.

2. The DC-DC converter (1, 1a, 1b, 1c, 1d, 1e, 1f) according to claim 1, wherein the DC-DC converter (1, 1a, 1b, 1c, 1d, 1e, 1f) comprises a transformer assembly (3), the transformer assembly (3) comprises N transformers (31, 32, 33, 34, ...), wherein each of the N transformer (31, 32, 33, 34, ...) comprises a primary winding (31a, 32a, 33a, 34a, ...) and a secondary winding (31b, 32b, 33b, 34b, ...), the primary winding (31a, 32a, 33a, 34a, ...) is coupled with corresponding one of the N subcircuits (22, 23, 24, ...).

3. The DC-DC converter (1, 1a, 1b, 1c) according to claim 1 or 2, wherein each of the N subcircuits (21, 22, 23, 24, ...) comprise a resonant capacitor (Cr1, Cr2, Cr3, Cr4, ...), a first resonant inductor (Lr1, Lr2, Lr3, Lr4, ...), and a second resonant inductor (Lm1, Lm2, Lm3, Lm4, ...), the resonant capacitor (Cr1, Cr2, Cr3, Cr4, ...), the first resonant inductor (Lr1, Lr2, Lr3, Lr4, ...), and the second resonant inductor (Lm1, Lm2, Lm3, Lm4, ...) are connected in series, wherein the second resonant inductor (Lm1, Lm2, Lm3, Lm4, ...) of each of the N subcircuits (21, 22, 23, 24, ...) is coupled with the primary winding (31a, 32a, 33a, 34a, ...) of corresponding one of the N transformers (31, 32, 33, 34, ...).

4. The DC-DC converter (1, 1a, 1b, 1e) according to any one of claims 1 to 3, wherein the DC-DC converter (1, 1a, 1b, 1e) comprises a secondary circuit assembly (4), the secondary circuit assembly (4) comprises N secondary circuits (41, 42, 43, 44, ...), wherein each of the N secondary circuits (41, 42, 43, 44, ...) comprises a first diode (D1, D5, D9, D13, ...), a second diode (D2, D6, D10, D14, ...), a third diode (D3, D7, D11, D15, ...), and a fourth diode (D4, D8, D12, D16, ...), the first diode (D1, D5, D9, D13, ...) and the third diode (D3, D7, D11, D15, ...) are connected in series, a first sub common node between the first diode (D1, D5, D9, D13, ...) and the third diode (D3, D7, D11, D15, ...) is connected to a first terminal of the secondary winding (31b, 32b, 33b, 34b, ...) of corresponding one of the N transformers (31, 32, 33, 34, ...), the second diode (D2, D6, D10, D14, ...) and the fourth diode (D4, D8, D12, D16, ...) are connected in series, and a second sub common node between the second diode (D2, D6, D10, D14, ...) and the fourth diode (D4, D8, D12, D16, ...) is connected to a second terminal of the secondary winding (31b, 32b, 33b, 34b, ...) of the corresponding one of the N transformers (31, 32, 33, 34, ...), wherein each of the N secondary circuits (41, 42, 43, 44, ...) comprises an output terminal, the output terminal of each of the N secondary circuits (41, 42, 43, 44, ...) are connected in parallel with one another, or the output terminal of each of the N secondary circuits (41, 42, 43, 44, ...) are connected in series with one another, or the output terminal of each of the N secondary circuits (41, 42, 43, 44, ...) are independent to one another.

5. The DC-DC converter (1c, 1d, 1f) according to any one of claims 1 to 3, wherein the DC-DC converter (1c, 1d, 1f) comprises a secondary circuit assembly (4), the secondary circuit assembly (4) comprises N secondary circuits (41, 42, 43, 44, ...), wherein each of the N secondary circuits (41, 42, 43, 44, ...) comprises a first active switch (So1), a second active switch (So2), a third active switch (So3), and a fourth active switch (So4), the first active switch (So1) and the third active switch (So3) are connected in series, a first sub common node between the first active switch (So1) and the third active switch (So3) is connected to a first terminal of the secondary winding (31b, 32b, 33b, 34b, ...) of corresponding one of the N transformers (31, 32, 33, 34, ...), the second active switch (So2) and the fourth active switch (So4) are connected in series, and a second sub common node between the second active switch (So2) and the fourth active switch (So4) is connected to a second terminal of the secondary winding (31b, 32b, 33b, 34b, ...) of the corresponding one of the N transformers (31, 32, 33, 34, ...).

6. The DC-DC converter (1f) according to any one of claims 1 to 3, wherein each of the N subcircuits (21, 22, 23, 24, ...) comprise an inductor (L1, L2, L3, L4, ...), wherein the inductor (L1, L2, L3, L4, ...) of each of the N subcircuits (21, 22, 23, 24, ...) is connected with the primary winding (31a, 32a, 33a, 34a, ...) of corresponding one of the N transformers (31, 32, 33, 34, ...), wherein one end of the inductor (L1, L2, L3, L4, ...) of the first subcircuit (21) of the N subcircuits (21, 22, 23, 24, ...) is connected with the common node between the first upper switch (Sa1) and the first lower switch (Sb1) directly, the other end of the inductor (L1, L2, L3, L4, ...) of the first subcircuit (21) of the N subcircuits (21, 22, 23, 24, ...) is connected with the primary winding (31a, 32a, 33a, 34a, ...) of corresponding one of the N transformers (31, 32, 33, 34, ...) directly, one end of the inductor (L1, L2, L3, L4, ...) of the i-th subcircuit (21, 22, 23, ...) of the N subcircuits (21, 22, 23, 24, ...) is connected with the middle node of the (i-1)-th pair of the N pairs of flying capacitors (Ca1, ..., CaN, Cb1, ..., CbN) directly, the other end of the inductor (L1, L2, L3, L4, ...) of the i-th subcircuit (21, 22, 23, ...) of the N subcircuits (21, 22, 23, 24, ...) is connected with the middle node of the i-th pair of the N pairs of flying capacitors (Ca1, ..., CaN, Cb1, ..., CbN) directly through the primary winding (31a, 32a, 33a, 34a, ...) of corresponding one of the N transformers (31, 32, 33, 34, ...).

7. The DC-DC converter (1d, 1e) according to any one of claims 1 to 3, wherein each of the N subcircuits (21, 22, 23, 24, ...) comprise an inductor (L1, L2, L3, L4, ...), wherein the inductor (L1, L2, L3, L4, ...) of each of the N subcircuits (21, 22, 23, 24, ...) is connected with the primary winding (31a, 32a, 33a, 34a, ...) of corresponding one of the N transformers (31, 32, 33, 34, ...), wherein one end of the inductor (L1, L2, L3, L4, ...) of the first subcircuit (21) of the N subcircuits (21, 22, 23, 24, ...) is connected with the common node between the first upper switch (Sa1) and the first lower switch (Sb1) directly, the other end of the inductor (L1, L2, L3, L4, ...) of the first subcircuit (21) of the N subcircuits (21, 22, 23, 24, ...) is connected with the primary winding (31a, 32a, 33a, 34a, ...) of corresponding one of the N transformers (31, 32, 33, 34, ...) directly, one end of the inductor (L1, L2, L3, L4, ...) of the i-th subcircuit (21, 22, 23, ...) of the N subcircuits (21, 22, 23, 24, ...) is connected with the middle node of the i-th pair of the N pairs of flying capacitors (Ca1, ..., CaN, Cb1, ..., CbN) directly, the other end of the inductor (L1, L2, L3, L4, ...) of the i-th subcircuit (21, 22, 23, ...) of the N subcircuits (21, 22, 23, 24, ...) is connected with the middle node of the (i-1)-th pair of the N pairs of flying capacitors (Ca1, ..., CaN, Cb1, ..., CbN) through the primary winding (31a, 32a, 33a, 34a, ...) of corresponding one of the N transformers (31, 32, 33, 34, ...).

8. The DC-DC converter (1, 1a, 1b, 1c, 1d, 1e, 1f) according to any one of the above claims, wherein the N upper switches (Sa1, Sa2, Sa3, ..., SaN) comprises a first upper switch (Sa1) and a second upper switch (Sa2), wherein the operation of the first upper switch (Sa1) controlled by a control gate signal is complementary to the operation of the second upper switch (Sa2) controlled by a control gate signal, the N lower switches (Sb1, Sb2, Sb3, ..., SbN) comprises a first lower switch (Sb1) and a second lower switch (Sb2), wherein the operation of the first lower switch (Sb1) controlled by a control gate signal is complementary to the operation of the second lower switch (Sb2) controlled by a control gate signal.

9. A DC-DC converter (1g, 1h, 1i, 1j, 1k), receiving a DC input voltage (Vin) from a voltage source (11) having a first terminal (11a) and a second terminal (11b), and the DC-DC converter (1g, 1h, 1i, 1j, 1k) **characterized by** comprising:
2N upper switches (Sa1, Sa2, Sa3, ..., SaN) electrically connected in series, wherein one end of the 2N upper switches (Sa1, Sa2, Sa3, ..., SaN) is electrically connected to the first terminal (11a) of the voltage source (11);
2N lower switches (Sb1, Sb2, Sb3, ..., SbN) electrically connected in series, wherein the 2N lower switches (Sb1, Sb2, Sb3, ..., SbN) are electrically connected between the 2N upper switches (Sa1, Sa2, Sa3, ..., SaN) and the second terminal (11b) of the voltage source (11), wherein a first lower switch (Sb1) of the 2N lower switches (Sb1, Sb2, Sb3, ..., SbN) is connected with a first upper switch (Sa1) of the 2N upper switches (Sa1, Sa2, Sa3, ..., SaN);
N pairs of flying capacitors (Ca1, ..., CaN, Cb1, ..., CbN), wherein a n-th pair of the N pairs of flying capacitors (Ca1, ..., CaN, Cb1, ..., CbN) is coupled between a common node between the (2n-1)-th and 2n-th upper switches (Sa1, Sa2, Sa3, ..., SaN) and a common node between the (2n-1)-th and 2n-th lower switches (Sb1, Sb2, Sb3, ..., SbN), wherein n=1, 2, ..., N; and
at least one subcircuit (21, 22, ...) coupled with a middle node of a corresponding one of the N pairs of flying capacitors (Ca1, ..., CaN, Cb1, ..., CbN);
wherein N is greater than or equal to 2.

10. The DC-DC converter (1g, 1h) according to claim 9, wherein the at least one subcircuit (21, 22, ...) is coupled between two middle nodes of corresponding two pairs of the N pairs of flying capacitors (Ca1, ..., CaN, Cb1, ..., CbN), wherein at least one subcircuit (21, 22, ...) comprises a plurality of subcircuits (21, 22, ...), a k-th subcircuit (21, 22, ...) of the plurality of subcircuit (21, 22, ...) is coupled between a middle node of (N-k+1)-th pair of the N pairs of flying capacitors (Ca1, ..., CaN, Cb1, ..., CbN) and a middle node of (N-k)-th pair of the N pairs of flying capacitors (Ca1, ..., CaN, Cb1, ..., CbN).

11. The DC-DC converter (1i, 1j, 1k) according to claim 9, wherein the at least one subcircuit (21, 22, ...) comprises a plurality of subcircuits (21, 22, ...), each of the plurality of subcircuit (21, 22, ...) is coupled between a common node between the first upper switch (Sa1) and the first lower switch (Sb1) and a middle node of a corresponding pair of the N pairs of flying capacitors (Ca1, ..., CaN, Cb1, ..., CbN).

12. The DC-DC converter (1g, 1h, 1i, 1j, 1k) according to any one of claims 9 to 11, wherein the DC-DC converter (1g, 1h, 1i, 1j, 1k) comprises a transformer assembly (3), the transformer assembly (3) comprises N transformers (31, 32, 33, ...), wherein each of the N transformers (31, 32, 33, ...) comprises a primary winding (31a, 32a, 33a, ...) and a secondary winding (31b, 32b, 33b, ...), the primary winding (31a, 32a, 33a, ...) is coupled with corresponding one of the at least one subcircuit (21, 22, ...).

13. The DC-DC converter (1g, 1h, 1i, 1j, 1k) according to any one of claims 9 to 12, wherein the at least one subcircuit (21, 22, ...) comprise a resonant capacitor (Cr1, Cr2, Cr3, Cr4..., CrN), a first resonant inductor (Lr1, Lr2, Lr3, Lr4, ..., ···, LrN), and a second resonant inductor (Lm1, Lm2, Lm3, Lm4, ···, LmN), the resonant capacitor (Cr1, Cr2, Cr3, Cr4, ···, CrN), the first resonant inductor (Lr1, Lr2, Lr3, Lr4, ..., ···, LrN), and the second resonant inductor (Lm1, Lm2, Lm3, Lm4, ···, LmN) are connected in series, wherein the second resonant inductor (Lm1, Lm2, Lm3, Lm4, ···, LmN) of the at least one subcircuit (21, 22, ...) is coupled with the primary winding (31a, 32a, 33a, ...) of corresponding one of the N transformers (31, 32, 33, ...).

14. The DC-DC converter (1g, 1h, 1i, 1j, 1k) according to any one of claims 9 to 13, wherein the DC-DC converter (1g, 1h, 1i, 1j, 1k) comprises a secondary circuit assembly (4), the secondary circuit assembly (4) comprises N secondary circuits (41, 42, 43, ...), wherein each of the N secondary circuits (41, 42, 43, ...) comprises a first diode (D1, D5, D9, D13, ...), a second diode (D2, D6, D10, D14, ...), a third diode (D3, D7, D11, D15, ...) and a fourth diode (D4, D8, D12, D16, ...), the first diode (D1, D5, D9, D13, ...) and the third diode (D3, D7, D11, D15, ...) are connected in series, a first sub common node between the first diode (D1, D5, D9, D13, ...) and the third diode (D3, D7, D11, D15, ...) is connected to a first terminal of the secondary winding (31b, 32b, 33b, ...) of corresponding one of the N transformers (31, 32, 33, ...), the second diode (D2, D6, D10, D14, ...) and the fourth diode (D4, D8, D12, D16, ...) are connected in series, and a second sub common node between the second diode (D2, D6, D10, D14, ...) and the fourth diode (D4, D8, D12, D16, ...) is connected to a second terminal of the secondary winding (31b, 32b, 33b, ...) of the corresponding one of the N transformers (31, 32, 33, ...), wherein each of the N secondary circuits (41, 42, 43, ...) comprises an output terminal, the output terminal of each of the N secondary circuits (41, 42, 43, ...) are connected in parallel with one another, or the output terminal of each of the N secondary circuits (41, 42, 43, ...) are independent to one another.

15. The DC-DC converter (1g, 1h, 1i, 1j, 1k) according to any one of claims 9 to 14, wherein DC-DC converter (1g, 1h, 1i, 1j, 1k) comprises N upper input capacitors (Cina1, ··· , CinaN) and N lower input capacitors (Cinb1, ···, CinbN), the N upper input capacitors (Cina1, ···, CinaN) and the N lower input capacitors (Cinb1, ···, CinbN) are coupled to the voltage source (11) in series, wherein a j-th upper input capacitor (Cina1, ···, CinaN) of the N upper input capacitors (Cina1, ···, CinaN) is coupled to the (2j-1)-th and 2j-th upper switches (Sa1, Sa2, Sa3, ..., SaN), a j-th lower input capacitor (Cinb1, ···, CinbN) of the N lower input capacitors (Cinb1, ···, CinbN) is coupled to the (2j-1)-th and 2j-th lower switches (Sb1, Sb2, Sb3, ..., SbN), wherein j=1, 2, ..., N.
